## Europäisches Patentamt
## European Patent Office
## Office européen des brevets

(19)

(11) Veröffentlichungsnummer: **0 618 868 B1**

(12) **EUROPÄISCHE PATENTSCHRIFT**

(45) Veröffentlichungstag der Patentschrift: **02.08.95**

(51) Int. Cl.⁶: **B60T 8/00**

(21) Anmeldenummer: **93903194.4**

(22) Anmeldetag: **04.01.93**

(86) Internationale Anmeldenummer:
**PCT/EP93/00005**

(87) Internationale Veröffentlichungsnummer:
**WO 93/12960 (08.07.93 93/16)**

(54) **VERFAHREN ZUR BESTIMMUNG DER KRAFTSCHLUSS-/SCHLUPFKENNLINIEN DER REIFEN EINES STRASSENFAHRZEUGS UND SCHLUPF-REGELUNGSSYSTEM ZUR DURCHFÜHRUNG DES VERFAHRENS.**

(30) Priorität: **03.01.92 DE 4200046**

(43) Veröffentlichungstag der Anmeldung:
**12.10.94 Patentblatt 94/41**

(45) Bekanntmachung des Hinweises auf die Patenterteilung:
**02.08.95 Patentblatt 95/31**

(84) Benannte Vertragsstaaten:
**DE GB**

(56) Entgegenhaltungen:
**EP-A- 0 393 375**
**WO-A-85/02592**
**DE-A- 4 010 212**
**DE-C- 3 941 409**
**US-A- 3 967 862**

(73) Patentinhaber: **MERCEDES-BENZ AG**
**Mercedesstrasse 136**
**D-70327 Stuttgart (DE)**

(72) Erfinder: **BURCKHARDT, Manfred**
**Alte Winnender Steige 23**
**D-7050 Waiblingen (DE)**
Erfinder: **EILERT, Gerd**
**Bühlgärten 1**
**D-7052 Schwaikheim (DE)**
Erfinder: **FREITAG, Rainer**
**Panoramastrasse 57**
**D-7440 Nürtingen (DE)**
Erfinder: **MÜLLER, Armin**
**Südstrasse 142**
**D-7150 Backnang (DE)**
Erfinder: **SCHÖB, Reinhold**
**Wilhelmstrasse 72**
**D-7024 Filderstadt (DE)**
Erfinder: **SPIECKER, Rainer**
**Amselweg**
**D-7053 Kernen (DE)**

BURCKHARDT,M 'Fahrwerktechnik: Bremsdynamik und Pkw-Bremsanlagen' 1991 , JÖRN-
SEN REIMPELL- VOGEL VERLAG , WÜRZ-
BURG (DE) (cited in the application) see
page 74-80

Erfinder: **KAZAN, Sinan**
**Frühlingshalde 1**
**D-7300 Esslingen (DE)**
Erfinder: **ZIMMER, Richard**
**Robert-Koch-Strasse 17**
**D-7012 Fellbach (DE)**

**Beschreibung**

Die Erfindung betrifft ein Verfahren zur Bestimmung der Kraftschluß-/Schlupfkennlinien der Reifen eines Straßenfahrzeuges, das mit einem auf eine Einzelrad-Regelung ausgelegten Antiblockiersystem ausgerüstet ist, wonach im Fahrbetrieb des Fahrzeuges aus gemessenen Wertepaaren des Schlupfes und des bei gegebenem Schlupf ausgenutzten Kraftschlußbeiwertes auf den Verlauf der jeweiligen Reifenkennlinie im gesamten $\mu$-/ $\lambda$-Feld geschlossen wird.

Ein derartiges Verfahren ist durch die deutsche Patentanmeldung P 41 02 301.3 bekannt.

Nach diesem bekannten Verfahren werden im Traktionsbetrieb des Fahrzeuges die Reifenkennlinien der angetriebenen Fahrzeugräder bestimmt und wegen der Äquivalenz von Antriebs- und Bremsschlupf die solchermaßen ermittelten Reifenkennlinien auch für die Bestimmung von Bremsschlupf-Schwellen benutzt, bei deren Überschreiten das Antiblockiersystem des Fahrzeuges ansprechen soll. Auf die maximal ausnutzbaren Kraftschlußbeiwerte - das $\mu$-Maximum der jeweiligen Reifenkennlinie wird aus dem Durchdrehverhalten der angetriebenen Fahrzeugräder geschlossen, deren Drehzahl ab Überschreiten eines dem Maximum der Kennlinie entsprechenden Schlupf-Wertes drastisch anwächst. Eine genaue Bestimmung der Reifenkennlinien im Bremsbetrieb ist nach diesem bekannten Verfahren nicht möglich.

Weiter ist durch die WO 85/02592 (PCT/EP84/00402) ein Verfahren zur Bestimmung eines optimalen Schlupfwertes $\lambda$ an wenigstens einem Rad eines Fahrzeuges zur Bremskraftregelung unter Verwendung der Radgeschwindigkeit $V_R$ und der Fahrzeuggeschwindigkeit $V_F$ wenigstens angenäherter Signale bekannt, gemäß welchem während der Fahrt der Schlupf $\lambda$ durch Änderung des Bremsdruckes $P_B$ variiert wird und zu einzelnen Meßzeitpunkten (k, k + 1, ...) Signalwertkombinationen der Radgeschwindigkeit $V_R^*$ (K), der Fahrzeuggeschwindigkeit $V_F^*$ (K), des Bremsdruckes $P_B^*$ (K) und der am Rad wirksamen Aufstandskraft $F_A^*$ (K) ermittelt werden; nach Vorliegen mehrerer solcher jeweils um ein Meßzeitintervall $\Delta t$ nacheinander ermittelter Signalwertkombinationen für verschiedene Werte des Schlupfes $\lambda$ wird eine Funktion $V_R$ (K + 1) = f [$V_R$(K), $V_F$(K), $P_B$(K), $F_A$(K)] ermittelt, wobei diese Funktion die Lösung eines Gleichungssystems mit unbekannten Koeffizienten $\alpha_n$ darstellt, dessen Koeffizienten anhand dieses Gleichungssystems ermittelt werden können. Aus diesen Koeffizienten $\alpha_n$ werden sodann Koeffizienten $a_n$ ermittelt, die Koeffizienten einer allgemeinen Beschreibung der $\mu$-Schlupfkurve $\mu = f(V_R, V_F)$ sind, aus deren Verlauf sodann die Lage des optimalen Schlupfwertes $\lambda_{opt}$ ermittelt wird.

Dieses bekannte Verfahren erfordert während einer Bremsung die Messung von Parametern, die prinzipiell mit einem hohen Fehler behaftet sind, so z.B. die Radaufstandsraft $F_A$, die nur indirekt "gemessen" werden kann oder im Falle einer "direkten" Messung, z.B. mit Hilfe von Dehnungsmeßstreifen, mit denen die Durchfederung von Radfedern erfaßbar ist, erheblichen Störgrößen durch die Federungsbewegungen ausgesetzt ist, aber auch die Fahrzeuggeschwindigkeit $v_F$, deren Wert während einer Bremsung, bei der sämtliche Fahrzeugräder mit einem Bremsschlupf behaftet sind, nur sehr ungenau ermittelbar ist, dies jedenfalls dann, wenn die Fahrzeuggeschwindigkeit aus einer Mittelung von einzelnen Radgeschwindigkeiten erfolgt, die mittels den Fahrzeugrädern einzeln zugeordneter Raddrehzahlsensoren erfaßt werden. Die Folge davon ist, daß das bekannte Verfahren, das die Durchführung einer Vielzahl von Rechenschritten erfordert, nur sehr langsam konvergiert, d.h. ein leidlich zuverlässiger - wirklichkeitsnaher - Verlauf der solchermaßen ermittelbaren $\mu$-Schlupfkurven erst nach einer Vielzahl von Bremsungen vorliegen könnte, die im Zuge einer mormalen Fahrt nicht durchgeführt werden.

Aufgabe der Erfindung ist es daher, ein Verfahren der eingangs genannten Art anzugeben, das im Bremsbetrieb des Fahrzeuges innerhalb kurzer Zeit eine weitgehend exakte Bestimmung der Reifenkennlinie ermöglicht, deren Kenntnis Voraussetzung für eine die dynamische Stabilität eines Fahrzeuges in einem weitestmöglichen Umfang aufrechterhaltene Schlupf-Regelung ist, sowie ein Schlupf-Regelungssystem, mit dem das Verfahren durchführbar ist.

Diese Aufgabe wird hinsichtlich des Verfahrens durch die kennzeichnenden Merkmale a) bis c) des Patentanspruchs 1 und in weiterer Ausgestaltung dieses Verfahrens durch die Merkmale der Ansprüche 2 bis 10 und hinsichtlich des Schlupf-Regelungssystems durch die kennzeichnenden Merkmale des Patentanspruchs 11 sowie der auf diesen zurückbezogenen Ansprüche 12 bis 20 gelöst.

Hiernach wird in einer Anfangsphase einer mit mäßiger Fahrzeugverzögerung verknüpften Zielbremsung die Radbremse nur eines einzigen Fahrzeugrades mit Bremsdruck beaufschlagt und dieser Bremsdruck derart rasch gesteigert, daß sich eine dem Fahrerwunsch entsprechende Entwicklung der Fahrzeugverzögerung ergibt. In dieser anfänglichen Testphase wird fortlaufend der absolute Bremsschlupf gemessen, was dadurch sehr genau möglich ist, daß mindestens die nicht gebremsten Fahrzeugräder frei rollen und dadurch eine sehr genaue Information über die Fahrzeuggeschwindigkeit erzielbar ist, deren exakte Kenntnis wesentliche Voraussetzung für die exakte Schlupf-Bestimmung ist. Die Fahrzeugverzögerung kann ebenfalls sehr genau anhand der Raddrehzahlen der nicht verzögerten Fahrzeugräder bestimmt werden.

EP 0 618 868 B1

Das der Bremsung unterzogene Fahrzeugrad kann sehr nahe bis an die "Blockiergrenze" abgebremst werden, da die frei rollenden Fahrzeugräder dem Fahrzeug genügend Seitenführungskraft vermitteln, um die erforderliche Stabilität zu gewährleisten. Die Testbremsung wird abgebrochen, sobald durch die alleinige Bremsung des Testrades die Fahrzeugverzögerung z nicht weiter anwächst und/oder das gebremste Fahrzeugrad stärker verzögert wird als es einem vorgegebenen Schwellenwert entspricht. Durch zyklische Durchführung dieser Maßnahmen wird für sämtliche Fahrzeugräder die gültige Reifenkennlinie ermittelt, die je nach Dauer der Fahrt bzw. Anzahl der während einer Fahrt ausgeführten Bremsungen mehrfach aktualisiert werden kann, so daß auch Veränderungen der Reifenkennlinien erfaßbar sind, die dann für eine situationsgerechte Einstellung von Ansprechschwellen z.B. für ein Antiblockiersystem ausgenutzt werden können.

Da über die Hinterräder geringere Fahrzeugverzögerungen erreichbar sind als über die Vorderräder, ist es vorteilhaft, wenn die Testbremsphasen in der durch die Merkmale der Ansprüche 2 bis 4 angegebenen "Reihenfolge" durchgeführt werden.

Desweiteren ist es vorteilhaft, wenn bei einer Durchführung der Testbremsphase an einem angetriebenen Fahrzeugrad dieses vom Antriebsstrang des Fahrzeuges abgekuppelt wird, damit eine Rückwirkung des Antriebsstranges auf das gebremste Fahrzeugrad ausgeschlossen wird.

Der Fahrerwunsch "Zielbremsung" kann alternativ oder in Kombination daran erkannt werden, daß der Fahrer das Bremspedal der Bremsanlage mit einer Kraft betätigt, die kleiner als ein vorgegebener Schwellenwert ist oder daran, daß die Fahrzeugverzögerung kleiner gehalten wird als ein einstellbar vorgegebener Schwellenwert sehr genau auch daran, daß der Bremsdruck, den der Fahrer durch Betätigung des Bremsgeräts in die Bremsanlage einsteuert, kleiner ist als ein Schwellenwert.

Anstelle einer tabellarischen Eingabe gemessener Kraftschluß-Schlupf-Wertepaare in einen Speicher einer elektronischen Steuereinheit ist es vorteilhaft, die nach dem erfindungsgemäßen Verfahren ermittelten Reifenkennlinien fortlaufend zu generieren, wie gemäß den Ansprüchen 9 und 10 vorgesehen.

Hinsichtlich eines zur Durchführung und Anwendung des erfindungsgemäßen Verfahrens geeigneten Schlupf-Regelungssystems ist durch die Merkmale des Anspruchs 11 und in weiterer Ausgestaltung durch diejenigen der Ansprüche 12 und 13 eine konstruktiv einfache und raumsparende, insbesondere funktionssichere Gestaltung eines im Rahmen der Bremsanlage des Fahrzeuges vorgesehenen Bremsgeräts angegeben, bei dem geschlossene Bremskreise ausnutzbar sind, was aus sicherheitstechnischen Gründen besonders vorteilhaft ist.

Mittels eines gemäß Anspruch 14 vorgesehenen, zwischen den dem Vorderachs-Bremskreis der Bremsanlage des Fahrzeuges zugeordneten Ausgangsdruckraum des Tandem-Hauptzylinders und die zu den Vorderradbremsen weiterführende Hauptbremsleitung des Vorderachs-Bremskreises geschalteten, als Druckumsetzer wirkenden Sekundärzylinders, der seinerseits einen Steuerdruckraum hat, in den ein steuerbarer Ausgangsdruck der Steuerdruckquelle einkoppelbar ist, der dem im Ausgangsdruckraum dieses Sekundärzylinders allein durch Betätigung des Hauptzylinders erzeugbaren Ausgangsdruck additiv überlagerbar ist, wird zusätzliche Variabilität hinsichtlich der Bremskraft-Verteilungs-Steuerung erzielt, wobei es vorteilhaft ist, wenn dem Sekundärzylinder ein eigener Steuerdruckausgang der Steuerdruckquelle zugeordnet ist.

Mittels eines gemäß Anspruch 16 vorgesehenen Drucksensors, der ein für den Druck im Tandem-Hauptzylinder charakteristisches elektrisches Ausgangssignal erzeugt, ist auf einfache Weise der hinsichtlich der erwünschten Fahrzeugverzögerung bestehende Fahrerwunsch erkennbar.

Gemäß den Ansprüchen 17 und 18 vorgesehene Drucksensoren, die für den am jeweiligen Druckausgang der Steuerdruckquelle bereitgestellten Steuerdruck charakteristische elektrische Ausgangssignale bzw. für die in die einzelnen Radbremsen eingekoppelten Bremsdrücke charakteristische elektrische Ausgangssignale erzeugen, die der elektronischen Steuereinheit als Informations-Eingaben zugeleitet sind, ermöglichen eine genau dosierte Druckzumessung zu den einzelnen Radbremsen unter Wahrung optimaler dynamischer Stabilität des Fahrzeuges.

Sowohl zur Erkennung von Kurvenfahrt-Situationen als auch zur Steuerung der Bremskraftverteilung auf die einzelnen Fahrzeugräder im Sinne z.B. einer gleichmäßigen Kraftschlußausnutzung an sämtlichen Fahrzeugrädern, ist es vorteilhaft, wenn das Fahrzeug mit einem Querbeschleunigungssensor und/oder einem Gierwinkelsensor ausgerüstet ist, der mittels der elektronischen Steuereinheit des Schlupf-Regelungssystems verarbeitbare elektrische Ausgangssignale erzeugt.

Zur Erkennung des Fahrerwunsches "Zielbremsung" oder "Vollbremsung" ist es auch vorteilhaft, wenn ein Kraft-Sensor vorgesehen ist, der ein für die Kraft, mit der der Fahrer das Bremspedal der Bremsanlage betätigt, charakteristisches elektrisches Ausgangssignal erzeugt, durch das, wenn der Signalpegel einen Schwellenwert überschreitet, die Durchführung einer Testbremsphase abgebrochen oder deren Einleitung von vornherein verhindert wird.

4

Das erfindungsgemäße Verfahren und ein zu seiner Durchführung geeignetes Schlupf-Regelungssystem werden nachfolgend mit Bezug auf eine Fahrzeugbremsanlage anhand der Zeichnung näher beschrieben und erläutert. Es zeigen:

Fig. 1 eine mit einem erfindungsgemäßen Bremsschlupf-Regelungssystem ausgerüstete hydraulische Zweikreis-Bremsanlage eines Fahrzeuges in vereinfachter, schematischer Blockschaltbilddarstellung;

Fig. 2 konstruktive Einzelheiten eines im Rahmen der Bremsanlage gemäß Fig. 1 einsetzbaren Bremsgeräts;

Fig. 3 ein Detail des Tandem-Hauptzylinders des Bremsgeräts gemäß Fig. 2 und

Fig. 4 eine Kraftschluß-/Bremsschlupf-Reifenkennlinie zur Erläuterung der Funktion des Schlupf-Regelungssystems gemäß Fig. 1

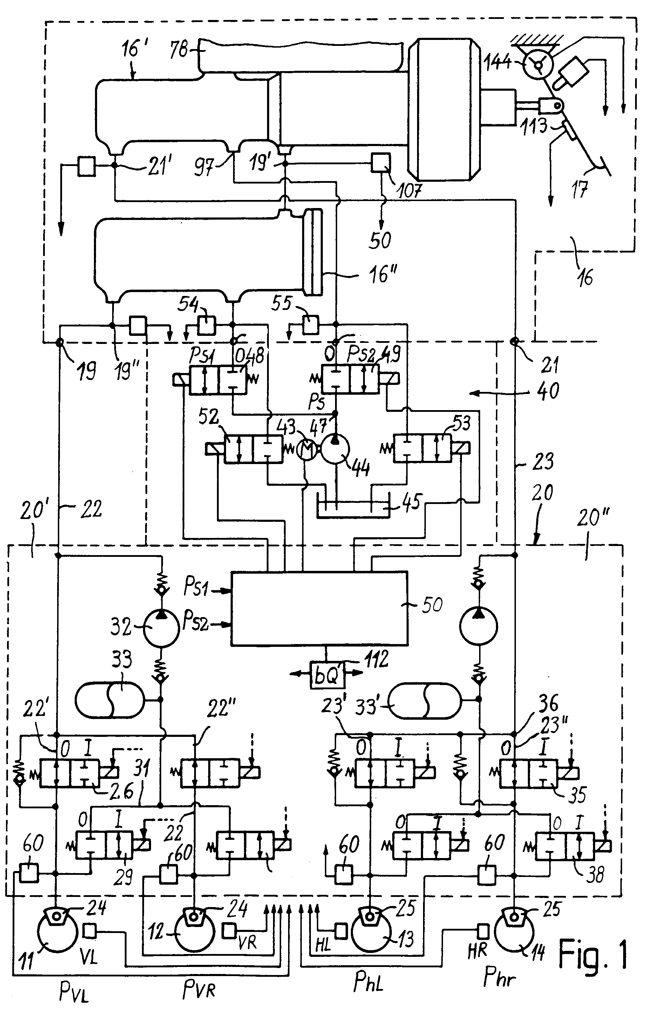

Durch die in der Fig. 1 ihrem grundsätzlichen Aufbau nach dargestellte, insgesamt mit 10 bezeichnete hydraulische Zweikreis-Bremsanlage ist ein Straßenfahrzeug repräsentiert, das mit einem komplexen Schlupf-Regelungssystem ausgerüstet ist, das dem Fahrzeug, unbeschadet der Möglichkeit einer Ausnutzung hoher Fahrzeugbeschleunigungen und -verzögerungen in den statis tisch bedeutsamen Fahrsituationen ein hohes Maß an dynamischer Stabilität und damit Sicherheit im Fahrbetrieb ermöglicht. Dieses Schlupf-Regelungssystem vermittelt die Funktionen sowohl eines Antiblockiersystems (ABS), als auch die einer Antriebs-Schlupf-Regelung (ASR), wie auch diejenige einer - elektronischen - Bremskraft-Verteilungssteuerung (EBKV), welche geeignet ist, dem Fahrzeug erwünschte Bremskraftverteilung aufzuprägen, die z.B. bei einer Teilbremsung der Ausnutzung erhöhter Hinterachs-Bremskraftanteile entsprechen kann und bei einer Vollbremsung einer idealen Bremskraftverteilung, die im wesentlichen gleicher Kraftschlußausnutzung an den - gebremsten - Vorder- und Hinterrädern des Fahrzeugs entspricht.

Darüber hinaus ist das Schlupf-Regelungssystem dahingehend ausgelegt, daß die Radbremsen in jeder beliebigen Kombination und unabhängig von dem Fahrbetrieb, sei es daß sich das Fahrzeug in beschleunigter oder verzögerter oder in einer Fahrt mit gleichförmiger Geschwindigkeit befindet, selbsttätig aktivierbar sind, wobei die einzelnen Beiträge der über die Radbremsen entfalteten Bremskräfte individuell einstellbar sind.

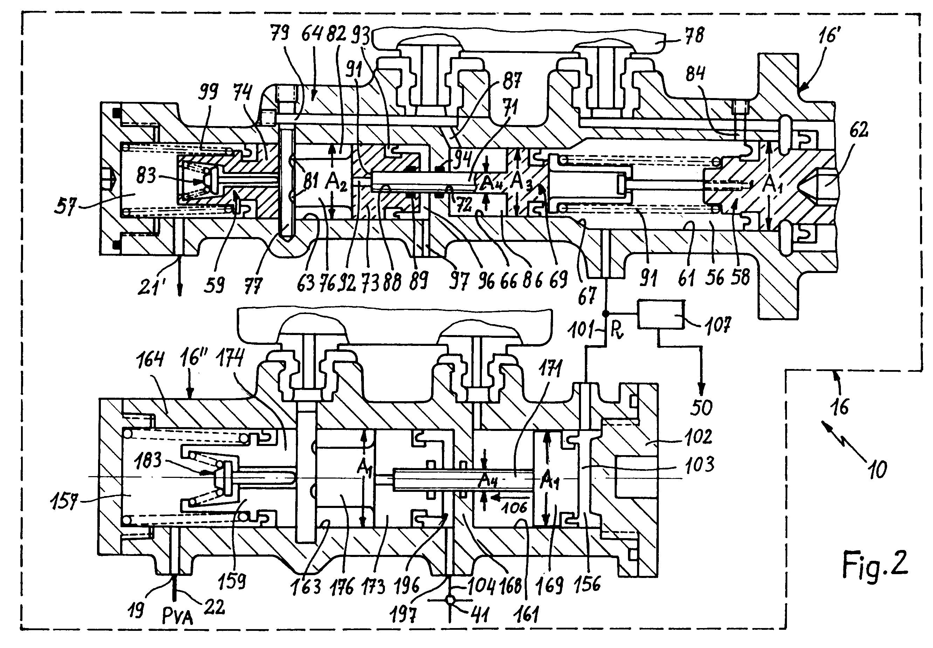

Um diese Funktionen zu erzielen, ist die Bremsanlage 10 mehr im einzelnen wie nachfolgend erläutert aufgebaut, wobei zur Erläuterung konstruktiver und funktioneller Details der Bremsanlage 10 auch auf die Fig. 2 Bezug genommen sei.

Für das Fahrzeug wird zum Zweck der Erläuterung vorausgesetzt, daß es einen Hinterachs-Antrieb hat, bei dem die Möglichkeit einer automatischen "Unterbrechung" des Antriebsstranges vorgesehen ist, sei es dadurch, daß das Fahrzeug ein automatisches Getriebe hat, das während der Fahrt, insbesondere im Bremsbetrieb des Fahrzeuges, selbsttätig auf Leerlauf geschaltet werden kann, oder dadurch, daß, falls das Fahrzeug mit einem Schaltgetriebe ausgerüstet ist, ein elektrisch steuerbares Lösen und Wiedereinrücken der Kupplung möglich ist, über die der Antriebsmotor und das Getriebe miteinander kuppelbar sind.

Die zum Lösen der Kupplung und Einschalten der Leerlaufstellung eines automatischen Getriebes erforderlichen Einrichtungen sind, der Einfachheit der Darstellung halber, in den Zeichnungsfiguren nicht dargestellt.

Für die Bremsanlage 10 ist, zum Zweck der Erläuterung, weiter vorausgesetzt, daß die linke Vorderradbremse (VL) 11 und die rechte Vorderradbremse (VR) 12 zu einem Vorderachs-Bremskreis I und die linke Hinterradbremse (HL) 13 und die rechte Hinterradbremse (HR) 14 zu einem Hinterachs-Bremskreis II zusammengefaßt sind.

Das zur Bremsdruckversorgung der beiden Bremskreise I und II vorgesehene, insgesamt mit 16 bezeichnete Bremsgerät der Bremsanlage 10, das einen dem Vorderachs-Bremskreis I zugeordneten Druckausgang 19 hat, an den die zu den Vorderradbremsen 11 und 12 hin sich verzweigende Hauptbremsleitung 22 des Vorderachs-Bremskreises I angeschlossen ist und einen dem Hinterachs-Bremskreis II zugeordneten Druckausgang 21, an den die sich zu den Hinterradbremsen 13 und 14 hin verzweigende Hauptbremsleitung 23 des Hinterachs-Bremskreises II angeschlossen ist, umfaßt einen gestuften Tandem-Hauptzylinder 16' spezieller Bauart, deren konstruktive Einzelheiten der Fig. 2 entnehmbar sind, der mittels eines Bremspedals 17 über einen Bremskraftverstärker 18, der als hydraulischer oder als pneumatischer Bremskraftverstärker ausgebildet sein kann, betätigbar ist und einen dem Vorderachs-Bremskreis I zugeordneten Druckausgang 19' hat, an den ein im wesentlichen als Druckumsetzer fungierender Sekundärzylinder 16'' angeschlossen ist, dessen Druckausgang 19'' unmittelbar mit dem dem Vorderachs-Bremskreis I zugeordneten Druckausgang 19 des Bremsgeräts 16 verbunden ist, sowie einen dem Hinterachs-Bremskreis II zugeordneten Druckausgang 21', der unmittelbar mit dem dem Hinterachs-Bremskreis II zugeordneten Druckausgang 21 des Bremsgeräts 16 verbunden ist oder diesen unmittelbar bildet.

Die Bremssättel 24 bzw. 25 der Vorderradbremsen 11 und 12 bzw. der Hinterradbremsen 13 und 14, die jeweils als Scheibenbremsen ausgebildet sind, sind als Zwei-Kolben-Sättel vorausgesetzt, die an den Vorderradbremsen jeweils identisch ausgelegt sind und an den Hinterradbremsen ebenfalls eine identische, von derjenigen der Vorderradbremsen jedoch unterschiedliche Auslegung haben, die im Sinne einer Festabstimmung der Vorderachs-/Hinterachs-Bremskraftverteilung auf dynamisch-stabiles Verzögerungsverhalten des Fahrzeuges im gesamten Bremsbereich - Teilbremsung bis Vollbremsung - getroffen ist.

Es versteht sich jedoch, daß anstelle von Zweikolben-Sätteln 24 und 25 auch Vierkolben-Bremssättel mit jeweils zwei Kolbenpaaren Verwendung finden könnten, wobei - pro Bremse - jeweils nur ein Kolbenpaar der Bremssättel 24 bzw. 25 für eine "normale", d.h. ohne Schlupfregelung erfolgende Bremsung ausgenutzt werden und die weiteren Kolben-Paare zur Schlupf-Regelung ausgenutzt werden könnten.

Das Fahrzeug ist mit einem Antiblockiersystem (ABS) ausgerüstet, das durch seine in der Fig. 1 insgesamt mit 20 bezeichnete elektrohydraulische Steuereinheit repräsentiert ist.

Für dieses Antiblockiersystem ist beim dargestellten, speziellen Ausführungsbeispiel vorausgesetzt, daß es, um die Bremskreise I und II geschlossen halten zu können, nach dem Rückförderprinzip arbeitet, wonach in Bremsdruck-Abbau-Phasen der Antiblockierregelung aus den Vorderradbremsen 11 und/oder 12 bzw. den Hinterradbremsen 13 und/oder 14 abgelassene Bremsflüssigkeit wieder in die Hauptbremsleitung 22 und/oder 23 des Vorderachs-Bremskreises I bzw. des Hinterachs-Bremskreises II und über diese zurück zum Bremsgerät 16 gepumpt wird.

Dieses Antiblockiersystem ist - in für sich bekannter Art der Realisierung - dahingehend ausgebildet, daß an den Radbremsen 11 und 12 bzw. 13 und 14 des jeweiligen Bremskreises I bwz. II "gegenphasige" Bremsdruck-Änderungen möglich sind, d.h., daß an der einen Radbremse 11 oder 12 bzw. 13 oder 14 des jeweiligen Bremskreises I bzw. II Bremsdruck ab- oder aufgebaut werden kann, während an der anderen Radbremse des jeweiligen Bremskreises I bzw. II Bremsdruck wieder aufgebaut wird.

Demgemäß sind im Rahmen der elektrohydraulischen Steuereinheit 20 des Antiblockiersystems dem Vorderachs-Bremskreis I und dem Hinterachs-Bremskreis II die einzeln Zugeordneten Untereinheiten 20' und 20'' vorgesehen, die je für sich gesehen, einen im vorstehenden Sinne erläuterten gegenphasigen Bremsdruckabbau bzw. Bremsdruckaufbau an der linken Vorderradbremse 11 und der rechten Vorderradbremse 12 bzw. der linken Hinterradbremse 13 und der rechten Hinterradbremse 14 des Fahrzeuges ermöglichen.

Die dem Vorderachs-Bremskreis I zugeordnete Untereinheit 20' der elektrohydraulischen Steuereinheit 20 des Antiblockiersystems umfaßt in für sich bekannter Schaltungsanordnung 2 der linken Vorderradbremse 11 und der rechten Vorderradbremse 12 die einzeln zugeordnete Einlaßventile 26 und 27, mittels derer die von der Verzweigungsstelle 28 der Hauptbremsleitung 22 des Vorderachs-Bremskreises I ausgehenden, zu den einzelnen Radbremsen 11 und 12 führenden Bremsleitungszweige 22' und 22'' einzeln freigebbar und absperrbar sind. Diese Einlaßventile 26 und 27 sind - beim dargestellten Ausführungsbeispiel - als 2/2-Wege-Magnetventile ausgebildet, deren Grundstellung 0 ihre Durchflußstellung ist, in der die Vorderradbremsen 11 und 12 mit dem dem Vorderachs-Bremskreis I zugeordneten Druckausgang 19 des Bremsgeräts 16 kommunizierend verbunden sind, und deren erregte Stellung I ihre Sperrstellung ist, in welcher die Vorderradbremsen 11 und 12 gegen die Verzweigungsstelle 28 der Hauptbremsleitung 22 des Vorderachs-Bremskreises I und damit auch gegen den diesem zugeordneten Druckausgang 19 des Bremsgeräts 16 abgesperrt sind.

Weiter umfaßt die Untereinheit 20' der elektrohydraulischen Steuereinheit 20 des Antiblockiersystems den Vorderradbremsen 11 und 12 je einzeln zugeordnete Auslaßventile 29 und 30, mittels derer die beiden Vorderradbremsen 11 und 12 - einzeln oder gemeinsam - an eine Rücklaufleitung 31 des Vorderachs-Bremskreises I anschließbar sind, aus der mittels einer dem Vorderachs-Bremskreis I zugeordneten Rückförderpumpe 32 in Bremsdruck-Abbau-Phasen der Bremsdruck-Regelung an mindestens einer der Vorderradbremsen 11 und/oder 12 abgelassene Bremsflüssigkeit in die Hauptbremsleitung 22 des Vorderachs-Bremskreises I und über diese in das Bremsgerät 16 zurückgepumpt werden kann.

Die Auslaßventile 29 und 30 des Vorderachs-Bremskreises I sind, gemäß der Darstellung der Fig. 1, als 2/2-Wege-Magnetventile ausgebildet, deren Grundstellung 0 ihre Sperrstellung ist, in welcher die Radbremse(n) 11 und/oder 12 gegen die Rücklaufleitung 31 abgesperrt ist/sind, und deren erregte Stellung I ihre Durchflußstellung ist, in welcher die Radbremse(n) 11 und/oder 12 des Vorderachs-Bremskreises I an die Rücklaufleitung 31 angeschlossen ist/sind.

An die Rücklaufleitung 31 des Vorderachs-Bremskreises I ist ein Niederdruckspeicher 33 angeschlossen, der in üblicher Gestaltung als Kolben-Feder-Speicher ausgebildet ist und in Bremsdruck-Abbauphasen, die am Vorderachs-Bremskreis I erfolgen, abgelassene Bremsflüssigkeit rasch aufnehmen kann, um die erforderliche schnelle Druckentlastung der jeweiligen Vorderradbremse 11 bzw. 12 erzielen zu können, wobei die Rückförderpumpe 32, die über ein Eingangs-Rückschlagventil an den Niederdruck-Speicher 31 und über ein Ausgangs-Rückschlagventil an die Hauptbremsleitung 22 des Vorderachs-Bremskreises I angeschlossen ist, die abgelassene Bremsflüssigkeit erforderlichenfalls aus dem Niederdruckspeicher 33 in das Bremsgerät 16 zurückpumpt.

Mit hierzu analoger Schaltungsverknüpfung und Funktion umfaßt die dem Hinterachs-Bremskreis II zugeordnete Untereinheit 20' der elektrohydraulischen Steuereinheit 20 des Antiblockiersystems den Hinterradbremsen 13 und 14 einzeln zugeordnete Einlaßventile 34 und 35, mittels derer die von einer Verzweigungsstelle 36 der Hauptbremsleitung 23 des Hinterachs-Bremskreises II zu dessen Radbremsen 13 und 14 weiterführenden Bremsleitungszweige 23' und 23'' je einzeln freigebbar bzw. absperrbar sind, sowie den Radbremsen 13 und 14 des Hinterachs-Bremskreises II einzeln zugeordnete Auslaßventile 37 und 38, mittels derer die Radbremsen 13 und 14 des Hinterachs-Bremskreises II einzeln oder gemeinsam an eine Rücklaufleitung 31' des Hinterachs-Bremskreises II anschließbar bzw. gegen diese absperrbar sind, wie auch eine dem Hinterachs-Bremskreis II zugeordnete Rückförderpumpe 32' sowie einen an die Rücklaufleitung 31' des Hinterachs-Bremskreises II angeschlossenen Niederdruckspeicher 33', aus der/dem in Bremsdruckabbauphasen die am Hinterachs-Bremskreis II erforderlich sind, abgelassene Bremsflüssigkeit in die Abflußleitung 23 des Hinterachs-Bremskreises II bzw. den diesem zugeordneten Funktionsteil des Bremsgeräts 16 der Bremsanlage 10 zurückpumpbar ist.

Die Rückförderpumpen 22 und 22' des Vorderachs-Bremskreises I und des Hinterachs-Bremskreises II können, wie nicht eigens dargestellt, als Kolbenpumpen, insbesondere als Freikolbenpumpen ausgebildet sein, die einen gemeinsamen Exzenterantrieb haben.

Im Rahmen des Schlupf-Regelungs-Systems der Bremsanlage 10 ist weiter eine insgesamt mit 40 bezeichnete Steuerdruckquelle vorgesehen, die einen dem Vorderachs-Bremskreis I zugeordneten Steuerdruckausgang 41 und einen dem Hinterachs-Bremskreis II zugeordneten Steuerausgang 42 hat, an denen definierte, erforderlichenfalls verschiedene Drücke $p_{s1}$ und/oder $p_{s2}$ bereitstellbar sind, wobei diese Drücke $p_{s1}$ und $p_{s2}$ einem erwünschten Zeitverhalten entsprechend anhebbar und absenkbar sind.

Als Druckerzeugungsaggregat ist eine mittels eines elektrischen Antriebsmotors 43 antreibbare Pumpe 44 vorgesehen, deren Fördermenge als Drehzahl-proportional vorausgesetzt ist, wobei der Elektromotor 43 seinerseits hinsichtlich der Drehzahl steuerbar ist, zumindest in Abhängigkeit von der Frequenz einer gepulsten Betriebsspannung oder dem Pegel der Versorgungsspannung, mit der der Elektromotor 43 betrieben wird.

Die Steuerdruckquelle 40 arbeitet zweckmäßigerweise mit Bremsflüssigkeit als Druckmedium, für das ein eigener Vorratsbehälter 45 der Steuerdruckquelle 40 vorgesehen ist.

Die Steuerdruckquelle 40 ist mit einem Druckbegrenzungsventil 46 versehen, das den am Hochdruckausgang 47 der Pumpe 44 bereitgestellten Ausgangsdruck $P_s$ auf einen Wert von maximal ca. 80 bar begrenzt.

Zwischen den Hochdruckausgang 47 der Pumpe 44 und die Steuerdruckausgänge 41 und 42 der Steuerdruckquelle 40 ist je ein Auslaß-Steuerventil 48 bzw. 49 geschaltet, mittels derer die Drücke $p_{s1}$ und $p_{s2}$ steuerbar sind, die an den Steuerdruckausgängen 41 und 42 der Steuerdruckquelle 40 bereitstellbar sind. Diese Auslaß-Steuerventile 48 und 49 sind als 2/2-Magnetventile ausgebildet, die durch elektrische Ausgangssignale einer elektronischen Steuereinheit 50 - gepulst - ansteuerbar sind, die als zentrale Steuereinheit des Schlupf-Regelungssystems vorgesehen ist und auch die für die Ansteuerung der Einlaßventile 26,27 sowie 34,35 und der Auslaßventile 21,30 sowie 37,38 der elektrohydraulischen Bremsdruck-Steuereinheit 20 des Antiblockiersystems erforderlichen elektrischen Ausgangssignale erzeugt, die aus einer vergleichenden sowie differenzierenden Verarbeitung von Ausgangssignalen den Fahrzeugrädern einzeln zugeordneter Raddrehzahlsensoren 51 gewonnen werden, deren Ausgangssignale nach Pegel und/oder Frequenz die Information über das dynamische Verhalten - Radumfangsgeschwindigkeit, Beschleunigung und Verzögerung - der Fahrzeugräder enthalten.

Zwischen die Steuerdruck-Ausgänge 41 und 42 der Steuerdruckquelle 40 und deren Vorratsbehälter 45 ist weiter je ein Druckabsenkungs-Steuerventil 52 bzw. 53 geschaltet, durch deren z.B. gepulste Ansteuerung, mit Ausgangssignalen der elektronischen Steuereinheit 50 die an den Steuerdruckausgängen 41 und 42 der Steuerdruckquelle 40 herrschenden Ausgangsdrücke absenkbar sind. Auch die Druckabsenkungs-Steuerventile 52 und 53 sind als 2/2-Wege-Magnetventile ausgebildet.

Die Grundstellungen 0 sowohl der Auslaßsteuerventile 48 und 49 als auch der Druckabsenkungs-Steuerventile 52 und 53 der Steuerdruckquelle 40 sind deren Sperrstellungen, in denen zum einen der Hochdruckausgang 47 der Pumpe 44 gegen die Druckausgänge 41 und 42 der Steuerdruckquelle 40 abgesperrt ist und zum anderen die Steuerdruckausgänge 41 und 42 der Steuerdruckquelle 40 gegen deren Vorratsbehälter 55 abgesperrt sind. Ihre hierzu alternativen Durchflußstellungen I sind die erregten Stellungen, in denen die Steuerdruckausgänge 41 und 42 - alternativ oder gemeinsam - an den Hochdruckausgang 47 der Pumpe angeschlossen sind, alternativ dazu mit dem Vorratsbehälter 45 der Steuerdruckquelle 40 verbunden sind.

Zur Erfassung der an den Steuerdruckausgängen 41 und 42 der Steuerdruckquelle 40 bereitgestellten Ausgangsdrücke $p_{s1}$ und $p_{s2}$ sind je ein Drucksensor 54 bzw. 55 vorgesehen, die für diese Drücke $p_{s1}$ und $p_{s2}$ charakteristische elektrische Ausgangssignale erzeugen, die der elektronischen Steuereinheit 50 zugeleitet und von dieser verarbeitbar sind.

Als weitere Informations-Eingaben sind der elektronischen Steuereinheit 50 die Ausgangssignale der den Radbremsen 11 bis 14 einzeln zugeordneten Bremsdruck-Sensoren 60 zugeleitet, welche für die in die Vorderradbremsen 11 und 12 eingekoppelten Bremsdrücke $p_{vl}$ und $p_{vr}$ sowie für die in die Hinterradbremsen 13 und 14 eingekoppelten Bremsdrücke $p_{hl}$ sowie $p_{hr}$ charakteristische, von der elektronischen Steuereinheit 50 verarbeitbare elektrische Ausgangssignale erzeugen.

Zur Erläuterung konstruktiver Details des in der Fig. 1 lediglich schematisch dargestellten Bremsgeräts 16 sei nunmehr auf die diesbezügliche Detaildarstellung der Fig. 2 Bezug genommen: Der Tandem-Hauptzylinder 16' ist als sogenannter Stufen-Hauptzylinder ausgebildet, bei dem der die eine axial bewegliche Begrenzung seines Primär-Ausgangsdruckraumes 56 bildende Primärkolben 58 und der die axial bewegliche Begrenzung eines Sekundär-Ausgangsdruckraumes 57 bildende Sekundärkolben 59 unterschiedliche Querschnittsflächen $A_1$ und $A_2$ haben, wobei die Querschnittsfläche $A_1$ des Primärkolbens 58 die größere ist.

Zwischen der Bohrungsstufe 61, in welcher der Primärkolben 58 druckdicht verschiebbar geführt ist, an dem über eine Druckstange 62, die mittels des Bremskraftverstärkers 18 verstärkte Betätigungskraft angreift und der Bohrungsstufe 63 des insgesamt mit 64 bezeichneten Hauptzylindergehäuses, in welcher der die axial bewegliche Begrenzung des Sekundär-Ausgangsdruckraumes 57 bildende Sekundärkolben 59 druckdicht verschiebbar geführt ist, erstreckt sich eine weitere, zentrale Bohrungsstufe 66, welche über eine Ringschulter 67 an die die gehäusefeste, radiale Begrenzung des Primär-Ausgangsdruckraumes 56 bildende Bohrungsstufe 61 anschließt und gegenüber derjenigen Bohrungsstufe 63, in welcher der Sekundärkolben 59 druckdicht verschiebbar geführt ist, durch eine Zwischenwand 68 des Zylindergehäuses 64 abgegrenzt ist.

In dieser zentralen Bohrungsstufe 66 ist ein die innere axial bewegliche Begrenzung des Primär-Ausgangsdruckraumes 56 bildender Betätigungskolben 69 druckdicht verschiebbar geführt, der mittels eines schlanken, axialen Stößels 71, der durch eine zentrale Bohrung 72 der Zwischenwand 68 des Hauptzylinders 64 druckdicht verschiebbar hindurchtritt, zentral an einem inneren Kolbenflansch 73 des Sekundärkolbens 59 abstützbar ist, dessen den Sekundär-Ausgangsdruckraum 57 unmittelbar begrenzender, "äußerer" Kolbenflansch 74 mit dem inneren Kolbenflansch 73 über eine geschlitzte Kolbenstange 76 verbunden ist, durch deren Schlitz ein gehäusefestes Anschlagröhrchen 77 radial hindurchtritt, das mit einer zum Bremsflüssigkeits-Vorratsbehälter 78 führenden Gehäusekanal 79 in kommunizierender Verbindung steht und mit Öffnungen 81 versehen ist, über die Bremsflüssigkeit in den sich zwischen den beiden Kolbenflanschen 73 und 74 des Sekundärkolbens 59 erstreckenden Nachlaufraum 82 überströmen kann.

Der den Sekundär-Ausgangsdruckraum 57 beweglich begrenzende Flansch 74 des Sekundärkolbens 59 ist mit einem insgesamt mit 83 bezeichneten Zentralventil versehen, das in der dargestellten, dem nicht betätigten Zustand der Bremsanlage entsprechenden Grundstellung des Sekundärkolbens 59 durch Anschlagwirkung zwischen einem Stößel seines Ventilkörpers und dem Anschlagröhrchen 77 in seiner Offen-Stellung gehalten ist, so daß zwischen dem Sekundär-Ausgangsdruckraum 57 und dem Bremsflüssigkeits-Vorratsbehälter 78 über den Nachlaufraum 82 ein Druckausgleich möglich ist, wobei das Zentralventil 83 nach einem kleinen Anfangsabschnitt des Bremsdruckaufbau-Hubes des Sekundärkolbens 59 in seine Schließ-Position gelangt, in welcher der Druckaufbau im Sekundär-Ausgangsdruckraum 57 möglich ist. Zum entsprechenden Druckausgleich in dem dem Vorderachs-Bremskreis I zugeordneten Primär-Ausgangsdruckraum 56 ist eine mit dem Bremsflüssigkeits-Vorratsbehälter 78 in kommunizierender Verbindung stehende Ausgleichsbohrung 84 vorgesehen, deren druckraumseitige Mündungsöffnung in der dem nicht betätigten Zustand der Bremsanlage 10 entsprechenden Grundstellung des Primärkolbens 58 freigegeben ist und nach einem kleinen Anfangsabschnitt des Bremsdruckaufbau-Hubes des Primärkolbens 58 gegen den Primär-Ausgangsdruckraum 56 abgesperrt ist, wonach in diesem bei weiterer Kolbenverschiebung Bremsdruck aufbaubar ist.

Der von dem axialen Stößel 71 des Betätigungskolbens 69 durchsetzte, axial gehäusefest durch die Zwischenwand 68 des Gehäuses 64 und axial beweglich durch den Betätigungskolben 69 begrenzte Ringraum 86, dessen ringförmige Querschnittsfläche um die Querschnittsfläche $A_4$ des axialen Stößels 71 kleiner ist als die Gesamt-Querschnittsfläche $A_3$ des Betätigungskolbens 69, auf der dieser mit dem im Primär-Ausgangsdruckraum 56 erzeugten Druck beaufschlagbar ist, ist über einen weiteren Gehäusekanal 87 permanent mit dem Bremsflüssigkeits-Vorratsbehälter 78 verbunden und daher drucklos gehalten.

Der innere Kolbenflansch 73 des Sekundärkolbens 59 ist, wie am besten aus der Detaildarstellung der Fig. 2a ersichtlich, mit einer zu der Zwischenwand 68 des Gehäuses 64 hin offenen Sackbohrung 88 versehen, in welcher der freie Endabschnitt 71' des axialen Stößels 71 des Betätigungskolbens 69 druckdicht verschiebbar geführt ist, wobei eine die diesbezügliche Abdichtung zwischen dem Stößel 71,71' und dem Sekundärkolben 59 vermittelnde Ringdichtung 89 kolbenfest an der der Zwischenwand 68 des Gehäuses zugewandten Seite des Sekundärkolbenflansches 73 angeordnet ist.

In der dargestellten Grundstellung des Sekundärkolbens 59 und des Betätigungskolbens 69 ist dessen Stößel 71 mit der Endstirnfläche seines Endabschnittes 71' am Grund 91 der Sackbohrung 88 axial abgestützt.

In die Sackbohrung 88 des inneren Kolbenflansches 73 des Sekundärkolbens 59 mündet eine zentrale Ausgleichsbohrung 92 kleineren Durchmessers, über die bei Relativbewegungen zwischen dem Sekundärkolben 59 und dem Betätigungskolben 69 Bremsflüssigkeit aus dem Nachlaufraum 82 in die Sackbohrung 88 nachströmen bzw. aus dieser in den Nachlaufraum 82 verdrängt werden kann.

Der mittels der kolbenfesten Ringdichtung 89 radial innen und mittels einer Dichtmanschette 93 des inneren Kolbenflansches 73 radial außen gegen den Nachlaufraum 82 und mittels der gehäusefesten, innerhalb der zentralen Bohrung 72 der Zwischenwand 68 angeordneten Ringdichtung 94 gegen den drucklosen Ringraum 68 abgedichtete, vom freien Endabschnitt 71' des Stößels 71 des Betätigungskolbens 69 axial durchsetzte Ringraum 96 ist über einen Steueranschluß 97 mit dem dem Hinterachs-Bremskreis II zugeordneten Steuerdruckausgang 42 der Steuerdruckquelle 40 verbunden und bildet somit einen Steuerdruckraum, durch dessen Beaufschlagung mit dem Ausgangsdruck $p_{s2}$ der Steuerdruckquelle 40 der über den Druckausgang 21' des Sekundär-Ausgangsdruckraumes 57 des Tandem-Hauptzylinders 16' in die Hinterradbremsen 13 und 14 einkoppelbare Bremsdruck gezielt veränderbar ist, wodurch die Vorderachs-/Hinterachs-Bremskraftverteilung entsprechend veränderbar ist.

Der Primärkolben 58, der Sekundärkolben 59 und damit auch der Betätigungskolben 69 werden durch Rückstellfedern 98 und 99 in ihre durch Anschlagwirkung markierten Grundstellungen gedrängt, wobei die am Primärkolben 58 angreifende Rückstellfeder 98 an dem Betätigungskolben angreift, dessen Grundstellung somit durch seine axiale Abstützung am Grund 91 der Sackbohrung 88 des Sekundärkolbens markiert ist, dessen Grundstellung wiederum durch rückwärtige Anlage seines äußeren Kolbenflansches 74 an dem Anschlagröhrchen 77 markiert ist, wobei die Rückstellfeder 99 des Sekundärkolbens 59 etwas kräftiger sein muß als diejenige des Primärkolbens 58.

Der weiter zum Bremsgerät 16 gehörende Sekundärzylinder 16'', an dessen Druckausgang 19 die Hauptbremsleitung 22 des Vorderachs-Bremskreises I angeschlossen ist, ist, seinem Aufbau nach, zu dem Tandem-Hauptzylinder 16' weitgehend analog und vermittelt im "normalen", d.h. einem Schlupf-Regelungsbetrieb nicht unterworfenen Bremsvorgang die Funktion eines 1/1-Druckumsetzers, der den im Primär-Ausgangsdruckraum 56 bei Betätigung des Tandem-Hauptzylinders 16' aufgebauten Bremsdruck auf den Druckausgang 19 - im wesentlichen ungemindert - überträgt.

Soweit Bau- und Funktionselemente des Sekundärzylinders 16'' mit Bezugsziffern belegt sind, die gegenüber den für Bau- und Funktionselemente des Tandem-Hauptzylinders 16' verwendeten Bezugszeichen um 100 erhöht sind, soll dies den Hinweis auf die Baugleichheit oder -analogie der solchermaßen bezeichneten Elemente bedeuten und gleichzeitig auch den Verweis auf die anhand des Tandem-Hauptzylinders 16' gegebene Beschreibung dieser Funktionselemente beinhalten, um Wiederholungen zu vermeiden. Die Beschreibung des Sekundärzylinders 16' wird daher - im wesentlichen - auf die gegenüber dem Tandem-Hauptzylinder 16' des Bremsgeräts 16 bestehenden Unterschiede beschränkt.

Der funktionell dem Primär-Ausgangsdruckraum 56 des Tandem-Hauptzylinders 16' entsprechende Druckraum 156, der axial beweglich durch den funktionell dem Betätigungskolben 69 entsprechenden Betätigungskolben 169 begrenzt ist, hat hier die Funktion eines Eingangsdruckraumes, der über eine Verbindungsleitung 101 mit dem Primär-Ausgangsdruckraum 56 des Tandem-Hauptzylinders 16' in ständig-kommunizierender Verbindung steht. Dieser Eingangsdruckraum 156 ist anstatt durch einen axial beweglichen Primärkolben 58 durch ein gehäusefestes, an das Gehäuse 164 druckdicht angesetztes Zylinder-Abschlußteil 102 abgeschlossen. In der dem nicht betätigten Zustand der Bremsanlage 10 entsprechenden Grundstellung des Sekundärkolbens 159 des Sekundärzylinders 16' und des Betätigungskolbens 169 ist der letztere über einen in axialer Richtung nur wenig ausgedehnten Anschlag-Fortsatz 103 unmittelbar an dem Gehäuse-Abschlußteil 102 - axial - abgestützt.

Die Bohrungsstufe 161, in welcher der Betätigungskolben 169 druckdicht verschiebbar geführt ist, hat dem Betrage nach dieselbe Querschnittsfläche $A_1$ wie die Bohrungsstufe 61 des Tandem-Hauptzylinders 16', in welcher dessen Primärkolben 58 druckdicht verschiebbar geführt ist.

Auch die gegenüber der den Betätigungskolben 169 druckdicht verschiebbar enthaltenden Bohrungsstufe 161 durch die Zwischenwand 168 abgegrenzte Bohrungsstufe 163, innerhalb derer durch den äußeren Kolbenflansch 174 des Sekundärkolbens 159 der Sekundär-Ausgangsdruckraum 157 des Sekundärzylinders 16'' axial beweglich begrenzt ist und durch dessen innere Kolbenstufe 173, die durch die geschlitzte Kolbenstange 176 mit der äußeren Kolbenstufe 174 fest verbunden ist, der von dem axialen Stößel 171 des Betätigungskolbens 169 axial durchsetzte Ringraum 196 axial beweglich begrenzt ist, hat dieselbe Quer- schnittsfläche $A_1$ wie der Eingangsdruckraum 156 des Sekundärzylinders 16'' bzw. der Primär-Ausgangsdruckraum 56 des Tandem-Hauptzylinders 16' des Bremsgeräts 16. Dieser Ringraum 196 steht über seinen Steueranschluß 197 und eine erforderlichenfalls vorhandene Anschlußleitung 104 mit dem dem Vorderachs- Bremskreis I zugeordneten Steuerdruckausgang 41 der Steuerdruckquelle 40 in Verbindung.

Bei einer durch Betätigung des Bremspedals 17 gesteuerten Bremsung des Fahrzeuges bewirkt der aus dem Primär-Ausgangsdruckraum 156 des Tandem-Hauptzylinders 16' in den Eingangsdruckraum 156 des Sekundärzylinders 16'' angekoppelte Druck $P_V$, daß auf den Betätigungskolben 169 eine in Richtung des Pfeils 106, d.h. in derjenigen Verschieberichtung des Betätigungskolbens 169 und des mit diesem über den Stößel 171 bewegungsgekoppelten Sekundärkolbens 159 gerichtete Kraft ausgeübt wird, deren Betrag durch das Produkt $A_1 \cdot p_v$ gegeben ist, wodurch der Sekundärkolben 159 in Richtung des Pfeils 106 verschoben wird und nach einem kleinen Anfangsabschnitt dieses Verschiebehubes das Zentralventil 183 in seine Sperrstellung gelangt, so daß nunmehr im Sekundär-Ausgangsdruckraum 157 des Sekundärzylinders 16'' ein Druck $p_{VA}$ aufgebaut wird, der betragsmäßig dem bzw. nahezu dem im Primär-Ausgangsdruckraum 56 des Tandem-Hauptzylinders 16' aufgebauten Druck $P_v$ entspricht und als Bremsdruck in den Vorderachs-Bremskreis I eingekoppelt wird.

Durch Einkopplung des an dem dem Hinterachs-Bremskreis II - dem Bremskreis der angetriebenen Fahrzeugräder - zugeordneten Steuerdruckausgang 42 definiert einstellbaren Druckes $p_{s2}$ in den Ringraum 96 des Tandem-Hauptzylinders 16' ist es möglich, die Hinterradbremsen 13 und 14 auch dann mit Bremsdruck zu beaufschlagen, wenn der Fahrer das Bremspedal 17 des Tandem-Hauptzylinders 16' nicht betätigt. Dadurch ist es möglich, an den - angetriebenen - Hinterrädern des Fahrzeuges eine Antriebs- Schlupf-Regelung zu realisieren, die nach dem Prinzip arbeitet, ein zum Durchdrehen neigendes Fahrzeugrad durch - gezielte - Aktivierung seiner Radbremse wieder zu verzögern, um dadurch Drehmoment auf das nicht zum Durchdrehen neigende Fahrzeugrad zu übertragen. Die Auswahl des abzubremsenden Fahrzeugrades erfolgt dadurch, daß, während die Steuerdruckquelle 40 zur Erzeugung von Steuerdruck am Steuerdruckausgang 42 aktiviert ist, das Einlaßventil 34 oder 35, das der zu aktivierenden Hinterradbremse 13 oder 14 zugeordnet ist, in seiner Grundstellung gehalten wird, während das Einlaßventil 35 oder 34 der Radbremse 14 oder 13 des nicht zum Durchdrehen neigenden Hinterrades in seine Sperrstellung I umgeschaltet wird, wobei die elektronische Steuereinheit 15 die dafür erforderlichen Ansteuersignale aus einer nach bekannten Kriterien erfolgenden Verarbeitung der Ausgangssignale der den Fahrzeugrädern einzeln zugeordneten Raddrehzahlsensoren 60 erzeugt.

Auch während eines vom Fahrer durch Betätigung des Bremspedals 17 gesteuerten Bremsvorganges kann in die Hinterradbremsen zusätzlicher Bremsdruck durch Druckbeaufschlagung des Ringraumes 96 des Tandem-Hauptzylinders 16' eingesteuert werden, um im Teilbremsbereich, d.h. bei relativ niedrigen Fahrzeugverzögerungen, bei denen der maximal ausnutzbare Kraftschlußbeiwert zwischen der Fahrbahn und den gebremsten Fahrzeugrädern nicht völlig ausgenutzt wird, einen erhöhten Hinterachs-Bremskraftanteil zu erreichen, um die Vorderradbremsen nicht unnötig zu belasten, damit deren thermische Beanspruchung möglichst gering gehalten wird und die Bremsenbelastung gleichmäßiger auf die Vorderrad- und die Hinterradbremsen 11 und 12 sowie 13 und 14 "verteilt" wird.

Desgleichen ist es auch möglich, die Radbremsen 11 und 12 der - nicht angetriebenen - Vorderräder des Fahrzeuges dadurch zu aktivieren oder mit einem Bremsdruck zu beaufschlagen, der höher ist als der am Druckausgang 19' des Tandem-Hauptzylinders 16' bei einer Betätigung der Bremsanlage erzeugte Ausgangsdruck $P_v$, daß in den Ringraum 196 des Sekundärzylinders 16'' ein Steuerdruck $p_{s1}$ eingekoppelt wird, der auf definiertem Pegel oder mit definierter Anstiegsrate an dem dem Vorderachs-Bremskreis I zugeordneten Steuerdruckausgang 41 der Steuerdruckquelle 40 bereitgestellt wird.

Eine derartige Einkopplung von Steuerdruck $p_{s1}$ in den Ringraum 196 des Sekundärzylinders 16'' kann im Verlauf einer vom Fahrer durch Betätigung des Bremspedals 17 gesteuerten Bremsung erforderlich werden, um eine erwünschte - situationsgerechte - Vorderachs-/Hinterachs-Bremskraftverteilung zu erzielen, während eine unabhängig von einer vom Fahrer gesteuerten Bremsung erfolgende Aktivierung mindestens einer der Radbremsen 11 und/oder 12 der - nicht angetriebenen - Vorderräder des Fahrzeuges z.B. dann erforderlich werden kann, wenn beispielsweise in einer weder beschleunigten noch verzögerten Kurvenfahrt- Situation des Fahrzeuges einem übersteuernden Verhalten des Fahrzeuges und einer damit verbundenen Schleudergefahr nur noch dadurch Rechnung getragen werden kann, daß an den Vorderrädern des Fahrzeuges ein Bremsschlupf aufgebaut wird, der gleichzeitig eine Minderung der Seitenführungskraft der Vorderräder zur Folge hat, so daß das Fahrzeug zwar etwas "aus der Kurve getragen wird", gleichwohl aber noch steuerbar bleibt.

Eine von einer Betätigung der Bremsanlage 10 mittels des Bremspedals 17 unabhängige Aktivierung sowohl der Vorderradbremsen 11 und 12 als auch der Hinterradbremsen 13 und 14 ist auch dann erforderlich, wenn das Fahrzeug mit einer sogenannten "Abstandsregelung" ausgerüstet ist, die in Abhängigkeit von dem mittels eines Sensorsystems erfassbaren Abstand zu einem vorausfahrenden Fahrzeug, eine Aktivierung der Bremsanlage 10 auslösen soll, wenn dieser Abstand einen als kritisch erachteten Wert unterschreitet.

Die insoweit erläuterten funktionellen Eigenschaften der Bremsanlage 10, im wesentlichen die bei dieser vorgesehene Möglichkeit, die Vorderachs-/Hinterachs-Bremskraftverteilung in weiten Grenzen definiert verändern zu können, in Kombination mit der Möglichkeit, mittels der Einlaßventile 26 und 27 sowie 34 und 35 und der Auslaßventile 29 und 30 sowie 37 und 38 der elektrohydraulischen Bremsdruck-Steuereinheit 20 des Antiblockier systems in die einzelnen Radbremsen 11 bis 14 unterschiedliche Bremsdrücke einkoppeln zu können und damit entsprechend verschiedene Radbremskräfte einsteuern zu können, eröffnet die Möglichkeit, im Verlauf von Bremsvorgängen, die während einer Fahrt erforderlich werden sowie auch von Beschleunigungsvorgängen fortlaufend die für die einzelnen Fahrzeugräder jeweils gültigen Reifenkennlinien ermitteln zu können und die solchermaßen gewonnene Kenntnis zu einer z.B. unter dem Gesichtspunkt einer Optimierung der dynamischen Stabilität des Fahrzeuges geeigneten Schlupfregelung auszunutzen.

Zur Bestimmung der "Reifenkennlinien", d.h. des Zusammenhangs zwischen einem an dem jeweiligen Fahrzeugrad ausnutzbaren Kraftschlußbeiwert $\mu_B$ und dem für die Ausnutzung dieses Kraftschlußbeiwerts $\mu_B$ erforderlichen - absoluten - Bremsschlupf $\lambda_B$, der durch die Beziehung

$$\lambda_B = \frac{v_F - v_R}{v_F} \qquad (1)$$

gegeben ist, wird, gemäß einer Variante eines diesbezüglich geeigneten Verfahrens, dessen Ablauf durch die elektronische Steuereinheit 50 selbsttätig gesteuert wird, wie folgt vorgegangen, wobei vorausgesetzt wird, daß die Bremsung im Verlauf einer Geradeausfahrt des Fahrzeuges erfolgt und der Fahrer eine Zielbremsung durchführen möchte, d.h. eine Bremsung, in deren Verlauf der Fahrer die Kraft $K_p$ mit der er das Bremspedal 17 betätigt, ab Beginn der Bremsung zunächst relativ langsam steigert, bis eine Fahrzeugverzögerung von etwa 0,2 g (g = 9,81 ms$^{-2}$) erreicht ist und der Fahrer danach die Pedal-Betätigungskraft $K_p$ konstant hält um die genannte Fahrzeugverzögerung für eine erwünschte Zeitspanne aufrechtzuerhalten:

In einer derartigen Situation wird in einer ersten Bremsphase nur eine Radbremse, z.B. die linke Hinterradbremse 13 mit Bremsdruck $p_{hl}$ beaufschlagt, der so bemessen wird, daß sich die vom Fahrer gewünschte Fahrzeugverzögerung z ergibt. Die Auswahl des für die Bremsung zunächst herangezogenen Hinterrades erfolgt dadurch, daß, gesteuert durch Ausgangssignale der elektronischen Steuereinheit 50, die Einlaßventile 26 und 27 der Vorderradbremsen 11 und 12 sowie das Einlaßventil 35 der rechten Hinterradbremse in deren Sperrstellungen I geschaltet werden. Um mit dem allein gebremsten, linken Hinterrad die dem Fahrerwunsch entsprechende Fahrzeugverzögerung z zu erreichen, die durch die Beziehung

$$z = F_{Blh}/G_g \qquad (2)$$

gegeben ist, in der mit $F_{Bhl}$ die mittels der linken Hinterradbremse 13 entfaltete Bremskraft und mit $G_g$ das Gesamtgewicht des Fahrzeuges bezeichnet sind, ist es in einer üblichen Auslegung einer Bremsanlage eines Personenkraftwagens entsprechenden Fällen erforderlich, daß der in die linke Hinterradbremse 13 eingekoppelte Bremsdruck etwa dem 7-fachen desjenigen Druckes entspricht, der im Primär-Ausgangsdruckraum 56 des Tandem-Hauptzylinders 16' des Bremsgeräts 16 der Bremsanlage 10 aufgebaut wird, wenn der Fahrer das Bremspedal 17 dieses Tandem-Hauptzylinders 16' mit derjenigen Betätigungskraft $K_p$ betätigt, mit der er die - wunschgemäße - Fahrzeugverzögerung z vorknüpft.

Demgemäß wird in der genannten, einleitenden Phase der Bremsung - durch Aktivierung der Steuerdruckquelle 40 - über deren dem Hinterachs-Bremskreis II zugeordneten Steuerdruckausgang 42 in den dem Hinterachs-Bremskreis II zugeordneten Ringraum 96 des Tandem-Hauptzylinders 16' ein Steuerdruck $p_{s2}$ eingekoppelt, durch dessen Wirkung auf die diesem ausgesetzte Ringfläche des inneren Kolbenflansches 73 des Sekundärkolbens 59 des Tandem-Hauptzylinders 16' auf den Sekundärkolben 59 eine zusätzliche, im Sinne einer Druckerhöhung im Sekundär-Ausgangsdruckraum 57 des Tandem-Hauptzylinders 16' wirkende Betätigungskraft ausgeübt wird, durch die im Ergebnis die für die Erzielung der erforderlichen Fahrzeugverzögerung hinreichende Bremsdruck-Beaufschlagung der linken Hinterradbremse 13 erreicht wird.

Im Verlauf dieser ersten Phase einer Bremsung, die nicht unbedingt eine Zielbremsung sein muß, sondern auch eine Bremsung sein kann, bei der der Fahrer eine möglichst effektive Fahrzeugverzögerung erreichen möchte, wird der Steuerdruck $p_{s2}$, der in den dem Hinterachs-Bremskreis II zugeordneten Ringraum 96 des Tandem-Hauptzylinders 16' eingekoppelt werden muß, auf etwa den 6-fachen Wert des im Primär-Ausgangsdruckraum 56 des Tandem-Hauptzylinders 16' - durch Pedalbetätigung - erzeugten Druckes eingeregelt. Der im Primär-Ausgangsdruckraum 56 des Tandem-Hauptzylinders 16' erzeugte Druck $P_V$ wird mittels eines elektronischen Drucksensors 107 überwacht, der ein für den im Primär-Ausgangsdruckraum 56 des Tandem-Hauptzylinders herrschenden Druck $P_V$ charakteristisches elektrisches Ausgangssignal erzeugt, das als Informationseingabe der elektronischen Steuereinheit 50 zugeleitet ist.

Aus einem Vergleich der Ausgangssignale des Drucksensors 107, der den Primär-Ausgangsdruck des Tandem-Hauptzylinders 16' überwacht sowie des Drucksensors 55, der ein für den an dem Steuerdruckausgang 42 der Steuerdruckquelle 40 herrschenden Druck charakteristisches elektrisches Ausgangssignal erzeugt, erzeugt die elektronische Steuereinheit 50, die Ansteuersignale für die Aktivierung des Motors 43 der Pumpe 47 sowie für das Auslaßsteuerventil 49 und erforderlichenfalls das Druckabsenkungssteuerventil 53 der Steuerdruckquelle durch die der am Steuerausgang 42 abgegebene Druck auf dem erforderlichen Wert gehalten wird.

In dieser ersten - einleitenden - Bremsphase wird aus einer Auswertung der Ausgangssignale der Raddrehzahlsensoren 51 fortlaufend der absolute Bremsschlupf gemäß der Beziehung (1) ermittelt, der sehr genau bestimmbar ist, da mit den Ausgangssignalen insbesondere der den nicht gebremsten Vorderrädern zugeordnete Raddrehzahlsensoren Signale zur Verfügung stehen, die ein sehr genaues Maß für die Fahrzeuggeschwindigkeit $v_F$ sind.

Aus einer zeitlich differenzierenden Verarbeitung der Ausgangssignale der den nicht angetriebenen Vorderrädern zugeordneten Raddrehzahlsensoren 51 ist auch die Fahrzeugverzögerung z sehr genau bestimmbar, die gemäß der Beziehung (2) mit der mittels des gebremsten linken Hinterrades ausübbaren Radbremskraft $F_{Bhl}$ verknüpft ist, die der Berechnung

$$F_{Bhl} = \mu Bhl \cdot F_{GHA}/2 \qquad (3)$$

genügt, so daß auch die Beziehung

$$z = \mu \beta lh \cdot \frac{F_{GHA}}{2 6g} \quad gilt,$$

in welcher mit $F_{GHA}/2$ die an dem gebremsten Hinterrad wirksame Normalkraft (Radlast) bezeichnet ist, die der halben Hinterachslast entspricht und mit $\mu_{Bhl}$ der bei der jeweiligen Verzögerung und dem mit dieser verknüpften Bremsschlupf $\lambda_{Blh}$ ausgenutzte, zwischen der Fahrbahn und dem gebremsten Fahrzeugrad wirksame Kraftschlußbeiwert bezeichnet sind.

Unter Berücksichtigung der bei einer Bremsung auftretenden dynamischen Achs- bzw. Radlastverlagerung, die für die gesamte Hinterachslast $F_{GHA}$ durch die Beziehung

$$F_{GHA} = (\psi - z \cdot \chi) \cdot G_g \qquad (4)$$

gegeben ist,

in welcher mit $\psi$ der auf das Fahrzeuggewicht $G_g$ bezogene Hinterachslastanteil und mit $\chi$ die radstandsbezogene Schwerpunktshöhe des Fahrzeuges bezeichnet sind (vgl. Burkhardt, Fahrwerktechnik: Bremsdynamik und PKW-Bremsanlagen Vogelbuchverlag, 1. Auflage 1991, ISBN 3-8023-0184-6, Seiten 74 bis 80), folgt aus den Beziehungen (2), (3) und (4) unmittelbar:

$$\mu_{Blh} = \frac{2z}{\psi - z \cdot \chi} \qquad (5)$$

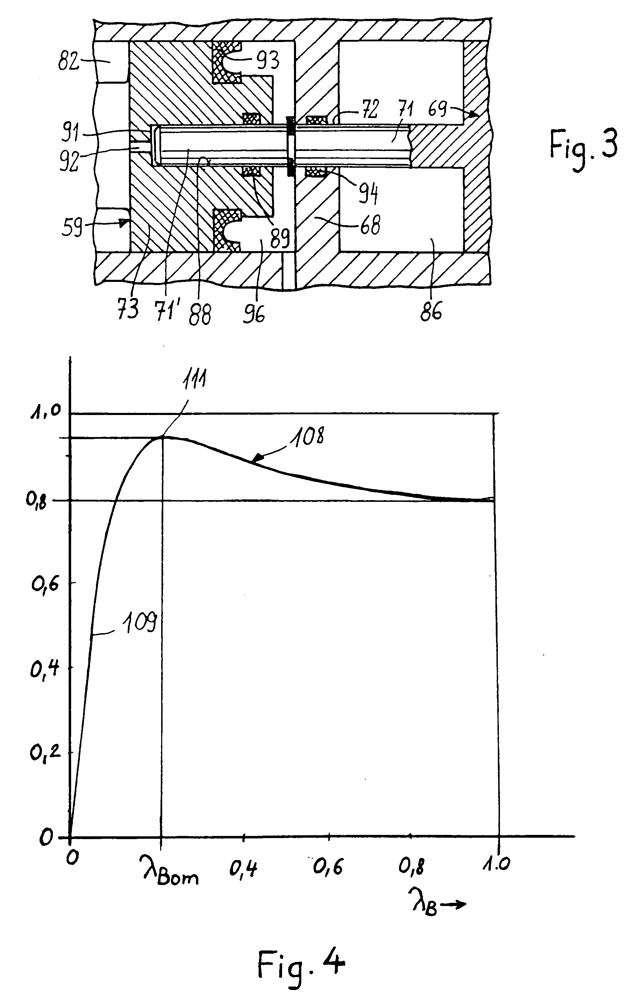

Durch eine mittels der elektronischen Steuereinheit 50 selbsttätig ausgeführte Auswertung dieser Beziehung (5) ist somit zu den aus den Ausgangssignalen der Raddrehzahlsensoren 51 ermittelten Werten des Bremsschlupfes $\lambda_{Blh}$ auch der jeweils zugehörige Kraftschlußbeiwert $\mu_{Bhl}$ ermittelbar und somit im gesamten interessierenden Schlupfbereich die sogenannte Reifenkennlinie ermittelbar, für die ein typischer Verlauf in der Fig. 4 dargestellt ist, in der als Ordinate der Kraftschlußbeiwert $\mu_B$ und als Abszisse der absolute Bremsschlupf $\lambda_B$ aufgetragen sind.

Dem z.B. für einen Sommerreifen als typisch anzusehenden Verlauf der in der Fig. 4 dargestellten Reifenkennlinie 108 ist zu entnehmen, daß mit zunehmendem Bremsschlupf $\lambda_B$ zunächst, wie durch den ansteigenden Ast 109 repräsentiert, der ausnutzbare Kraftschlußbeiwert zunimmt und bei einem Bremsschlupf $\lambda_{Bom}$ einen Maximalwert $\mu_{Bmax}$ erreicht, bei dessen Ausnutzung auch eine maximale Fahrzeugverzögerung erreichbar ist. Ab diesem Maximum 111 der Reifenkennlinie 108 nimmt, zu größeren Werten des Bremsschlupfes $\lambda_B$ der ausnutzbare Kraftschlußbeiwer $\mu_B$ wieder ab, was für den praktischen Fall einer Bremsung bedeutet, daß der Bremsschlupf $\lambda_B$ nicht über den Wert $\lambda_{Bom}$ hinaus gesteigert werden darf, da ansonsten - wegen der Abnahme des ausnutzbaren Kraftschlußbeiwertes - das gebremste Rad, dem die Reifenkennlinie 108 entspricht, sehr schnell in den Blockierzustand gelangt, der zwar, wenn das gebremste Rad stillsteht und der dem Bremsschlupf 1 entsprechende Gleitbeiwert $\lambda_{BG}$ erreicht ist, noch eine durchaus effektive Bremsung des Fahrzeuges ermöglicht, bei der jedoch dynamische Stabilität des Fahrzeuges nicht mehr gewährleistet ist und das Fahrzeug auch nicht mehr lenkbar ist.

Die genaue Kenntnis der Reifenkennlinie 108, mindestens deren Verlauf zwischen dem Koordinatenursprung des Diagramms der Fig. 4 und dem Maximum 111 der Reifenkennlinie 108 ist daher Voraussetzung dafür, die Ansprechschwellen eines Schlupf-Regelungssystems, z.B. eines Antiblockiersystems hinreichend hoch wählen zu können, damit möglichst hohe Werte des Kraftschlusses $_B$ ausnutzbar sind, andererseits aber auch zuverlässig vermieden wird, daß das Maximum der Reifenkennlinie 108 bei einer Bremsung überschritten wird und dadurch das Fahrzeug in einen dynamisch instabilen Zustand geraten könnte.

Die zur Ermittlung der Reifenkennlinie 108 bis zu deren Maximum 111 an nur einem Fahrzeugrad durchgeführte "Testphase" der Bremsung wird abgebrochen, sobald sich der Bremsschlupf $\lambda_{Bhl}$ dem Wert $\lambda_{Bom}$ nähert, was die elektronische Steuereinheit 50 daran "erkennt", daß die Fahrzeugverzögerung z nicht mehr zunimmt, weil sich der Wert $d\mu_B/d\lambda_B$ dem Wert 0 nähert und/oder daran, daß das gebremste Fahrzeugrad zunehmend verzögert wird.

Nach der Beendigung dieser "Testphase" wird die Bremsung "konventionell" durch Bremsdruck-Beaufschlagung auch der bislang nicht ausgenutzten Radbremsen 11 und 12 sowie 14 fortgesetzt, wobei der Bremsdruck $p_{hl}$ an dem als zuerstem gebremsten linken Hinterrades auf dasselbe Druckniveau gebracht - abgesenkt - wird, auf dem auch die nunmehr aktivierten Radbremsen beaufschlagt sind, wobei dieses Druckniveau $p_{hyd}$ für den Fall, daß die Testbremsung an einem Hinterrad des Fahrzeuges begonnen worden ist, durch die Beziehung

$$p_{hyd} = \phi \cdot p_{hydT}/2 \tag{6}$$

gegeben ist, in der mit $\phi$ der Hinterachs-Bremskraftanteil einer als fest abgestimmt vorausgesetzten Bremskraftverteilung und mit $p_{hydT}$ der Bremsdruck der in der Testphase ausgenutzten Radbremse im Zeitpunkt des Abbruches der Testphase bezeichnet sind.

Nachdem auf die geschilderte Weise eine "erste" Reifenkennlinie 108 ermittelt worden ist, wird bei einer nächsten Bremsung die Reifenkennlinie eines zweiten Reifens ermittelt, z.B. desjenigen des rechten Hinterrades, oder, falls der Fahrer, erkennbar an der Art und Weise, in der er die Bremsanlage 10 betätigt, mit etwas höherer Fahrzeugverzögerung bremsen möchte, die Kennlinie eines Vorderrad-Reifens auf analoge Weise ermittelt, wobei nunmehr anstelle der Beziehungen (4), (5) und (6) die Beziehungen

$$F_{GVA} = (1 - \psi + z \cdot \chi) \cdot G_g \tag{4'}$$

sowie

$$\mu_{BVl,r} = \frac{2z}{1 - \psi + z \cdot \chi} \tag{5'}$$

und

$$p_{hyd} = p_{hydT} \cdot (1-\phi)/2 \qquad\qquad (6')$$

gelten.

Die Indizes "l,r" gelten für "links, rechts".

Die Reihenfolge der von Bremsung zu Bremsung erfolgenden Bestimmungen der Reifenkennlinien kann zyklisch sein, derart, daß nach der Bestimmung der für ein Hinterrad geltenden Reifenkennlinie diejenige eines Vorderrades, danach diejenige des anderen Hinterrades und dann wiederum des anderen Vorderrades bestimmt wird usw. oder auch in der Weise, daß, wann immer die Art der Betätigung der Bremsanlage 10 durch den Fahrer erkennen läßt, daß dieser mit relativ hoher Fahrzeugverzögerung bremsen möchte, die Reifenkennlinie eines Vorderrades bestimmt wird und diejenige eines Hinterrades dann, wenn der Fahrer mit relativ niedriger Fahrzeugverzögerung bremsen will.

Durch die fortlaufende Ermittelung der Reifenkennlinien sind auch deren Änderungen erfaßbar, die sich z.B. aus Änderungen der Reifentemperatur während einer Fahrt ergeben und erheblich sein können. Die im Verlauf der Testphasen einer jeden Bremsung gleichsam "punktweise" aus fortlaufend bestimmten Kraftschluß-/Schlupfwertepaaren ermittelten Reifenkennlinien können in einem Speicher der elektronischen Steuereinheit 50 in tabellarischer Form abgelegt und für einen Vergleich mit aktuell ermittelten Schlupf-Werten bereitgehalten sein, aus dem gleichsam die "Stabilitätsreserve" ermittelbar ist, die in einer fahrdynamischen Situation noch vorhanden ist, um, z.B. im Falle einer Kurvenfahrt, zuverlässig feststellen zu können, ob bei einem gegebenen Bremsschlupf, dasselbe gilt sinngemäß bei einer beschleunigten Kurvenfahrt für einen Traktionsschlupf, noch genügend Seitenführungskraftreserve vorhanden ist, oder ob Brems- oder Traktionsschlupf abgebaut werden muß, um das Fahrzeug sicher durch eine Kurve steuern zu können.

In bevorzugter Auslegung der elektronischen Steuereinheit generiert diese die jeweils aktuelle Reifenkennlinie durch Anpassung einer qualitativ dem Kennlinienverlauf 108 entsprechenden Exponentialfunktion an eine Mehrzahl geeigneter Stützstellen, z.B. das Maximum 111 der Reifenkennlinie gemäß Fig. 4 und eine Mehrzahl weiterer Stützstellen, die zwischen dem Maximum 111 und dem Koordinatenursprung liegen, wobei diese Exponentialfunktion durch die Beziehung

$$\mu_B = C_1 \left( 1 - e^{-C_2 \lambda_B} \right) - C_3 \cdot \lambda_B \qquad\qquad (7)$$

gegeben ist, in der $C_1$, $C_2$ und $C_3$ - konstante - Reifenkennwerte bedeuten. Diese Reifenkennwerte sind so zu bestimmen, daß die angepaßte Kurve gemäß der Beziehung (7) möglichst gut der gemessenen Reifenkennlinie in dem der Messung zugänglichen Bereich entspricht. Zur Bestimmung geeignete Werte sind z.B.:

Der maximale Kraftschlußbeiwert $\mu_{Bmax}$, der Gleitbeiwert $\mu_{BG}$ bei $\lambda_B = 1$ und der optimale Bremsschlupf $\lambda_{Bom}$, bei dem der maximale Kraftschlußbeiwert $\mu_{Bmax}$ erreicht ist.

Basierend auf dem Näherungsansatz gemäß der Beziehung (7) ergibt sich das folgende Gleichungssystem

$$\mu_{Bmax} = C_1 \left( 1 - e^{-C_2 \lambda_{Bom}} \right) - C_3 \lambda_{Bom} \qquad\qquad (7.1)$$

$$\mu_G = C_1 \left( 1 - e^{-C_2} \right) - C_3 \qquad\qquad (7.2)$$

$$\frac{d\mu_B}{d\lambda_B} = C_1 C_2 \cdot e^{-C_2 \lambda_{Bom}} - C_3 \qquad\qquad (7.3)$$

Dieses Gleichungssystem läßt sich durch eine einfache Itteration, die rasch zu einer guten Näherung führt, "lösen", wobei in einer ersten Näherung angenommen werden kann:

$$(C_1)_1 = \mu_{Bmax} \qquad\qquad (7.4)$$

sowie unter Vernachlässigung der Größe $e^{-C2}$:

$$(C_3)_1 = (C_1)_1 - \mu_G \tag{7.5}$$

woraus sich ergibt

$$(C_2)_1 \cdot e^{-(C_2)_1 \cdot \lambda_{Bom}} = \frac{(C_1)_1 - \mu_G}{(C_1)_1} \tag{7.6}$$

Aus dieser Beziehung kann näherungsweise der Kennwert $(c_2)_1$, nach einem der "Regula falsi" entsprechenden Algorithmus rasch durch die elektronische Steuereinheit ermittelt werden, woraus sich in einer ersten Näherung die Beziehung ergibt:

(7.7)

Erforderlichenfalls weitere Näherungsschritte können von der elektronischen Steuereinheit 50 nach einfachen Algorhythmen durchgeführt werden.

Durch die Ausnutzung einer im wesentlichen der Beziehung (7) entsprechenden, von Fall zu Fall generierbaren Kennlinie 108 ist eine rasche Verarbeitung der gemessenen $\lambda_B$ sowie $\lambda_B$-Daten möglich, wie es für eine effektive Schlupfregelung erforderlich ist.

In einer für praktische Fälle meist ausreichend guten Näherung kann für die Größe $C_3$ ein Wert zwischen 0,2 und 0,3 angesetzt werden und für den rechnerisch zu bildenden Therm

$$C_1 C_2^2 \cdot e^{-C_2 \lambda_{Bom}}$$

ein Wert von etwa 7, wobei hieraus durch einfache Iteration der Wert $C_2$ bei gemessenem $\lambda_{Bom}$ bestimmt werden kann.

Die elektronische Steuereinheit 50 ist auch mit der Fähigkeit ausgestattet, in Kurvenfahrt-Situationen auftretende Querbeschleunigungen und daraus resultierende "seitliche" Radlastverlagerungen im Falle einer Kurvenfahrtbremsung bei der Druckzumessung zu den einzelnen Radbremsen 11,12 sowie 13 und 14 dahingehend zu berücksichtigen, daß an sämtlichen gebremsten Fahrzeugrädern eine Bremskraft-Regelung auf gleiche Kraftschlußausnutzung gegeben ist, wodurch eine insoweit optimale Abbremsung des Fahrzeugs erreichbar ist. Die dafür erforderliche Rückmeldung über die in den Radbremsen 11,12 sowie 13 und 14 herrschenden Bremsdrücke wird durch die diesen einzeln zugeordneten Drucksensoren 60 erzielt.

Die Informationen über die in einer Kurvenfahrt auftretenden Beschleunigungen kann durch Ausgangssignale eines Querbeschleunigungssensors 112 direkt oder indirekt aus einer Auswertung der unterschiedlichen Raddrehzahlen der Fahrzeugräder gewonnen werden und/oder durch einen - nicht dargestellten - Lenkwinkelsensor, gegebenenfalls auch durch einen - ebenfalls nicht dargestellten - Gierwinkelsensor.

Bei Kenntnis der Reifenkennlinien für Geradeausfahrt ist im Prinzip auch das gesamte Reifen-Kennlinienfeld bekannt, das für eine Überlagerung von Längs- und Querbewegungen des Fahrzeuges Gültigkeit hat und für die Ermittelung von "Seitenkraft-Reserven" ausnutzbar ist, wenn ein vorgegebener - wie erläutert meßbarer - Längsschlupf gegeben ist, wobei für einen Traktionsschlupf zu den für den Bremsschlupf angegebenen Erläuterungen analoge Beziehungen gelten, die mittels der elektronischen Steuereinheit 50 auswertbar und für die Schlupf-Regelung bzw. Steuerung ausnutzbar sind.

Um eine sichere Erkennung des Fahrerwunsches - Zielbremsung oder Vollbremsung - zu ermöglichen, ist das Bremspedal 17 auch mit einem z.B. mit Hilfe von Dehnungs-Meßstreifen realisierten Kraftsensor 113 ausgerüstet, dessen elektrisches Ausgangssignal ebenfalls der elektronischen Steuereinheit 50 zugeleitet ist. Desweiteren ist ein Winkelstellungsgeber 114 vorgesehen, dessen elektrisches Ausgangssignal ein Maß für die Pedalstellung und damit ebenfalls ein Maß für die vom Fahrer gewünschte Fahrzeugverzögerung darstellt. Aus einer differenzierenden Verarbeitung des Ausgangssignals dieses Winkelstellungsgebers 114 gewinnt die elektronische Steuereinheit 50 die Information darüber, wie schnell der Fahrer das Bremspedal 17 betätigt. Ist diese Betätigungsgeschwindigkeit sehr hoch, so "schließt" die elektronische Steuereinheit 50 hieraus, daß der Fahrer eine möglichst effektive Bremsung mit höchstmöglicher Bremsverzögerung auslösen möchte und unterbricht für diesen Fall die Durchführung von Testzyklen.

Desweiteren ist es zur Erkennung des Fahrerwunsches zweckmäßig, wenn auch der Sekundärzylinder 16'' an seinem Druckausgang 19'' mit einem Drucksensor 116 versehen ist, mittels dessen der tatsächlich in die Hauptbremsleitung (22) des Vorderachs-Bremskreises I eingekoppelte Druck erfaßbar ist.

## Patentansprüche

1. Verfahren zur Bestimmung der Kraftschluß-/Schlupfkennlinien der Reifen eines Straßenfahrzeuges, das mit einem auf eine Einzelrad-Regelung ausgelegten Antiblockiersystem ausgerüstet ist, wonach im Fahrbetrieb des Fahrzeuges aus gemessenen Wertepaaren des Schlupfes $\lambda$ und des bei gegebenem Schlupf ausgenutzten Kraftschlußbeiwertes $\mu$ auf den Verlauf der jeweiligen Reifenkennlinie im gesamten $\mu/\lambda$-Feld geschlossen wird, wobei während dieser anfänglichen Testphase der Bremsung fortlaufend der absolute Bremsschlupf $\lambda_B$ gemäß der Beziehung

$$\lambda_B = \frac{v_F - v_R}{v_F}$$

sowie die mit dem jeweiligen Wert des Bremsschlupfes $\lambda_B$ verknüpfte Kraftschlußausnutzung $\mu_B$ ermittelt wird, die im Falle der Bremsung eines Hinterrades durch die Beziehung

$$\mu_{BH} = \frac{2z}{4 - z \cdot \chi}$$

und im Falle einer Bremsung eines Vorderrades durch die Beziehung

$$\mu_{BV} = \frac{2z}{1 - 4 + z \cdot \chi}$$

gegeben ist, wobei in diesen Beziehungen mit $v_F$ die Fahrzeuggeschwindigkeit, mit $v_R$ die Geschwindigkeit des gebremsten Fahrzeugrades mit $\psi$ der Hinterachslastanteil, mit $\chi$ die radstandsbezogene Schwerpunkthöhe des Fahrzeuges und mit $z$ die gemessene Bremsverzögerung des Fahrzeuges bezeichnet sind, und wobei als Fahrzeuggeschwindigkeit $v_F$ ein aus den Radumfangsgeschwindigkeiten der nicht gebremsten Fahrzeugräder gewonnener Wert in Ansatz gebraucht wird, **gekennzeichnet durch** die folgenden Merkmale:

a) in einer Anfangsphase einer mit mäßiger Fahrzeugverzögerung verknüpften Zielbremsung wird nur die Radbremse eines einzigen Fahrzeugrades mit Bremsdruck beaufschlagt und dieser in der anfänglichen Steigerungsphase des Bremsdruckes so bemessen, daß sich die dem Fahrerwunsch entsprechende - zunehmende - Anfangsverzögerung mindestens annähernd ergibt;

b) sobald durch die alleinige Bremsung des Testrades die Fahrzeugverzögerung $z$ nicht weiter anwächst und/ oder das gebremste Fahrzeugrad stärker verzögert als es einem vorgegebenen Schwellenwert entspricht, wird die Testbremsung abgebrochen und die Bremsung durch Druckbeaufschlagung der weiteren Fahrzeugräder fortgesetzt;

c) die den Merkmalen a) und b) entsprechenden Test-Bremsphasen werden in zyklischer Folge für sämtliche Fahrzeugräder durchgeführt.

2. Verfahren nach Anspruch 1, **dadurch gekennzeichnet**, daß die Testbremsung an einem Hinterrad durchgeführt wird, wenn der Fahrerwunsch einer Bremsung mit mäßiger Fahrzeugverzögerung zwischen 0,1 g und 0,2 g entspricht und an einem Vorderrad, wenn der Fahrerwunsch einer etwas höheren Fahrzeugverzögerung zwischen 0,2 g und 0,4 g entspricht.

3. Verfahren nach Anspruch 1 oder Anspruch 2, **dadurch gekennzeichnet**, daß in einem Testzyklus zwei Fahrzeugräder gebremst werden, die einen diagonal gegenüberliegend angeordnet sind, wenn der Fahrerwunsch einer Bremsverzögerung von mehr als 0,4 g entspricht.

4. Verfahren nach Anspruch 3, **dadurch gekennzeichnet**, daß die Testphase zunächst am Hinterrad und danach am Vorderrad durchgeführt wird.

5. Verfahren nach einem der Ansprüche 1 bis 4, **dadurch gekennzeichnet**, daß bei einer Durchführung der Testbremsphase an einem angetriebenen Fahrzeugrad dieses vom Antriebsstrang des Fahrzeuges abgekuppelt wird.

6. Verfahren nach einem der Ansprüche 1 bis 5, **dadurch gekennzeichnet**, daß die Betriebssituation "Zielbremsung" des Fahrzeugs daran erkannt wird, daß der Fahrer das Bremspedal (17) der Bremsanlage (10) mit einer Kraft $K_p$ betätigt, die kleiner als ein vorzugsweise einstellbar-vorgegebener Schwellenwert ist.

7. Verfahren nach einem der Ansprüche 1 bis 6, **dadurch gekennzeichnet**, daß die Betriebssituation "Zielbremsung" des Fahrzeugs daran erkannbar ist, daß die Fahrzeugverzögerung kleiner ist als ein vorzugsweise einstellbar vorgegebener Schwellenwert $z_{min}$.

8. Verfahren nach einem der Ansprüche 1 bis 7, **dadurch gekennzeichnet**, daß die Betriebssituation "Zielbremsung" des Fahrzeugs daran erkannt wird, daß der Bremsdruck, den der Fahrer durch Betätigung des Bremsgeräts (16) in die Bremsanlage (10) einsteuert, kleiner ist als ein vorzugsweise einstellbar vorgegebener Schwellenwert $p_{min}$.

9. Verfahren nach einem der Ansprüche 1 bis 8, **dadurch gekennzeichnet**, daß für den anhand von Schlupf- und Verzögerungs- sowie gegebenenfalls Beschleunigungsmessungen ermittelten Kraftschlußbeiwert-/Schlupf-Zusammenhang, der für das jeweilige Fahrzeugrad gilt, durch Interpolation oder Anpassung einer mittels einer elektronischen Steuereinheit (50) auswertbaren Näherungsbeziehung an charakteristische Stützstellen des durch die Messung erzielten, gespeicherten $\mu_B/\lambda_B$-Wertepaar-Vorrates ein Algorhythmus gewonnen wird, der für eine fortlaufende Verarbeitung gemessener $\lambda_B$-Daten in Einheiten des ausgenutzten Kraftschlußbeiwertes ausnutzbar ist.

10. Verfahren nach Anspruch 9, dadurch gekennzeichnet, daß die Ermittelung des aktuell ausgenutzten Kraftschlußbeiwertes $\mu_B$ durch Auswertung einer Beziehung der Form

$$\mu_B = C_1 \left( 1 - e^{-C_2 \lambda_B} \right) - C_3 \lambda_B$$

erfolgt, in welcher mit $C_1$, $C_2$ und $C_3$ Konstanten bezeichnet sind, die durch Anpassung der Beziehung an gemessene $\lambda_B$- und $\mu_B$-Werte gewonnen werden und als Parameter der für die fortlaufende Auswertung genutzten Beziehung gespeichert und fortlaufend aktualisiert werden.

11. Schlupf-Regelungssystem zur Durchführung des Verfahrens nach einem der Ansprüche 1 bis 10, an einem Straßenfahrzeug, das sowohl mit einem Antiblockiersystem (20) ausgerüstet ist, das eine individuelle Bremsdruckregelung an den einzelnen Fahrzeugrädern ermöglicht, als auch mit einer Einrichtung zu einer elektronisch gesteuerten Verteilung der über die Vorderradbremsen (11,12) und über die Hinterradbremsen (13, 14) ausübbaren Bremsenkräfte, mit einem einen Tandem-Hauptzylinder (16') umfassenden Bremsgerät und mit einer Steuerdruckquelle (40) mit elektrisch steuerbarem Ausgangsdruck, der in einen Steuerdruckraum (96) des Bremsgeräts einkoppelbar ist und dadurch dem durch alleinige Pedalbetätigung des Bremsgeräts erzeugbaren Bremsdruck, der in die Hinterradbremsen (13,14) einkoppelbar ist, additiv überlagert wird, wobei die Steuerdruckquelle eine elektronische Steuereinheit (50) umfaßt, welche aus einer Verarbeitung mindestens von Raddrehzahlsensor-Ausgangssignalen, die den Fahrzeugrädern einzeln zugeordnet sind, sowie von Drucksensor-Ausgangssignalen, mittels derer für die erzeugbaren Bremsdrücke charakteristische elektrische Signale gewinnbar sind, die für die Steuerung der Bremskraftverteilung erforderlichen Steuersignale erzeugt, **dadurch gekennzeichnet**, daß die Vorderradbremsen (11,12) an den Primär-Ausgangsdruckraum (56) und die Hinterradbremsen (13, 14) an den Sekundär-Ausgangsdruckraum (57) des Tandem-Hauptzylinders (16') angeschlossen sind, daß die die gehäusefeste Begrenzung des Sekundär-Ausgangsdruckraumes (57) bildende Bohrungsstufe (63) des Gehäuses (64), innerhalb derer durch einen äußeren Kolbenflansch (74) des Sekundärkolbens (59) der SekundärAusgangsdruckraum (57) gegen einen - drucklos gehaltenen - Nachlaufraum (82) abgegrenzt ist und dieser durch einen inneren Kolbenflansch (73) gegen einen inneren Abschnitt dieser Bohrungsstufe (63) beweglich abgedichtet ist, durch eine Zwischenwand (68) des Gehäuses (64) gegen eine zentrale Bohrungsstufe (66) abgegrenzt ist, die von der den Primärkolben (58) aufnehmenden Bohrungsstufe (61) ausgeht, deren Querschnittsfläche $A_1$ etwas größer ist als die Querschnittsfläche $A_3$ der zentralen Bohrungsstufe (66), daß in der zentralen Bohrungsstufe (66) ein Betätigungskolben (69) druckdicht verschiebbar geführt ist, der die axial bewegliche - innere - Begrenzung des Primär-Ausgangsdruckraumes (56) bildet und diesen gegen einen drucklosen, axial gehäusefest durch die Zwischenwand (68) begrenzten Nachlaufraum (86) abgrenzt, daß dieser Betätigungskolben (69) mit einem den zentralen Nachlaufraum (86) axial durchsetzenden Stößel (71) versehen ist, der druckdicht verschiebbar durch eine zentrale Bohrung (72) der Zwischenwand (68) hindurchtritt und axial an dem inneren Kolbenflansch (73) des Sekundärkolbens (59) abstützbar ist, und daß der durch den inneren Kolbenflansch (73) des Sekundärkolbens (59) axial beweglich und durch die Zwischenwand (68) axial gehäusefest begrenzte, von dem Stößel (71) ebenfalls zentral durchsetzte Ringraum (96) an den Druckausgang (42) der steuerbaren Druckquelle (40) angeschlossen ist.

**12.** Schlupf-Regelungssytem nach Anspruch 11, **dadurch gekennzeichnet**, daß der am Sekundärkolben (59) angreifende Endabschnitt (71') des Stößels (71) des Betätigungskolbens (69) in einer Sackbohrung (88) des Sekundärkolbens (59) relativ zu diesem druckdicht verschiebbar angeordnet und am Grund (91) dieser Sackbohrung (88) abstützbar ist.

**13.** Schlupf-Regelungssystem nach Anspruch 12, **dadurch gekennzeichnet**, daß der innere Kolbenflansch (73) des Sekundärkolbens (59) mit einer zentral am Grund (91) der Sackbohrung (88) in diese mündenden und diese mit dem Nachlaufraum (82) verbindenden Ausgleichsbohrung (92) versehen ist.

**14.** Schlupf-Regelungssystem nach einem der Ansprüche 11 bis 13, **dadurch gekennzeichnet**, daß zwischen den dem Vorderachs-Bremskreis (I) der Bremsanlage (10) des Fahrzeugs zugeordneten Ausgangsdruckraum (56) des Tandem-Hauptzylinders (16') und die zu den Vorderradbremsen (11,12) weiterführende Hauptbremsleitung (22) des Vorderachs-Bremskreises (I) ein als Druckumsetzer wirkender Sekundärzylinder (16'') vorgesehen ist, der seinerseits einen Steuerdruckraum (196) hat, in den ein steuerbarer Ausgangsdruck der Steuerdruckquelle (40) einkoppelbar ist, der dem im Ausgangsdruckraum (157) dieses Sekundärzylinders (16'') allein durch Betätigung des Hauptzylinders (16') erzeugbaren Ausgangsdruck additiv überlagerbar ist.

**15.** Schlupf-Regelungssystem nach Anspruch 14, **dadurch gekennzeichnet**, daß dem Sekundärzylinder (16'') ein eigener Steuerdruckausgang (41) der Steuerdruckquelle (40) zugeordnet ist.

**16.** Schlupf-Regelungssystem nach einem der Ansprüche 11 bis 15, **dadurch gekennzeichnet**, daß an mindestens einen der Druckausgänge (19',21'), vorzugsweise den Druckausgang (19') des Primär-Ausgangsdruckraumes (26) des Tandem-Hauptzylinders (16') ein Drucksensor (107) angeschlossen ist, der ein für den Druck im Tandem-Hauptzylinder (16') charakteristisches elektrisches Ausgangssignal erzeugt, das der elektronischen Steuereinheit (50) als Informationseingabe zugeleitet ist.

**17.** Schlupf-Regelungssystem nach einem der Ansprüche 11 bis 16, **dadurch gekennzeichnet**, daß den Steuerdruckausgängen (41,42) der Steuerdruckquelle (40) je ein Drucksensor (54,55) zugeordnet ist, der ein für den am jeweiligen Druckausgang (41 bzw. 42) bereitgestellten Steuerdruck charakteristisches elektrisches Ausgangssignal erzeugt, das der elektronischen Steuereinheit (50) zugeleitet ist.

**18.** Schlupf-Regelungssystem nach einem der Ansprüche 11 bis 17, **dadurch gekennzeichnet**, daß den Vorderradbremsen (11,12) und den Hinterradbremsen (13,14) je einzeln zugeordnete Drucksensoren (60) vorgesehen sind, die für die in den einzelnen Radbremsen herrschenden Bremsdrücke charakteristische elektrische Ausgangssignale erzeugen, die der elektronischen Steuereinheit als weitere Informations-Eingaben zugeleitet sind.

**19.** Schlupf-Regelungssystem nach einem der Ansprüche 11 bis 18, **dadurch gekennzeichnet**, daß ein Querbeschleunigungssensor (112) und/oder ein Gierwinkel-Sensor vorgesehen ist/sind, die elektrische Ausgangssignale erzeugen, die von der elektronischen Steuereinheit (50) in Einheiten an dem Fahrzeug angreifender Querkräfte auswertbar sind.

**20.** Schlupf-Regelungssystem nach einem der Ansprüche 11 bis 19, **dadurch gekennzeichnet**, daß ein Kraft-Sensor vorgesehen ist, der ein für die Kraft, mit der der Fahrer das Bremspedal (70) der Bremsanlage (10) betätigt, charakteristisches elektrisches Ausgangssignal erzeugt, das der elektronischen Steuereinheit (50) zugeleitet ist.

**Claims**

**1.** Process for the determination of the friction/slip characteristics of the tyres of a road vehicle which is equipped with an antilock system designed on the basis of an individual wheel control, according to which, in the traction mode of the vehicle, the course of the respective tyre characteristic in the entire $\mu/\lambda$ field is concluded from pairs of measured values of the slip $\lambda$ and of the coefficient of friction $\mu$ utilized at a given slip, in which during this initial test phase of the braking, continuously, the absolute brake slip $\lambda_B$ is determined according to the relation

$$\lambda_B = \frac{v_F - v_R}{v_F}$$

**and the** friction utilization $\mu_B$ linked with the respective value of the brake slip $\lambda_B$ is determined, which friction utilization is given in the case of the braking of a rear wheel by the relation

$$\mu_{BH} = \frac{2z}{\psi - z \cdot \chi}$$

and in the case of a braking of a front wheel by the relation

$$\mu_{BV} = \frac{2z}{1 - \psi + z \cdot \chi}$$

**in these**
relations $v_F$ designating the vehicle speed, $v_R$ designating the speed of the braked vehicle wheel, $\psi$ designating the rear axle load component, $\chi$ designating the wheel base-related height of the centre of gravity of the vehicle and $z$ designating the measured braking retardation of the vehicle, and in which a value obtained from the wheel circumference speeds of the unbraked vehicle wheels is used, to an approximation, as vehicle speed $v_F$, characterized by the following features:

a) in an initial phase of a controlled braking linked with moderate vehicle retardation, only the wheel brake of an individual vehicle wheel is acted upon by brake pressure and the latter is dimensioned in the initial rising phase of the brake pressure so that the - increasing - initial retardation which is in accordance with the driver's wish at least approximately obtained;

b) as soon as, as a result of just the braking of the test wheel, the vehicle retardation $z$ increases no further and/or the braked vehicle wheel is retarded more strongly than corresponds to a predetermined threshold value, the test braking is interrupted and the braking is continued by pressure action on the further vehicle wheels;

c) the test braking phases corresponding to the features a) and b) are carried out in cyclic sequence for all vehicle wheels.

**2.** Process according to Claim 1, characterized in that the test braking is carried out on a rear wheel if the wish of the driver corresponds to a braking with moderate vehicle retardation between 0.1 g and 0.2 g, and on a front wheel if the wish of the driver corresponds to a somewhat higher vehicle retardation between 0.2 g and 0.4 g.

3. Process according to Claim 1 or Claim 2, characterized in that in a test cycle two vehicle wheels are braked, which are disposed diagonally opposite one another, if the wish of the driver corresponds to a braking retardation of more than 0.4 g.

4. Process according to Claim 3, characterized in that the test phase is carried out in the first instance on the rear wheel and thereafter on the front wheel.

5. Process according to one of Claims 1 to 4, characterized in that in the case of a performance of the test braking phase on a driven vehicle wheel, the latter is decoupled from the drive train of the vehicle.

6. Process according to one of Claims 1 to 5, characterized in that the operational situation "controlled braking" of the vehicle is recognized in that the driver actuates the brake pedal (17) of the braking system (10) with a force $K_p$ which is smaller than a preferably settably predetermined threshold value.

7. Process according to one of Claims 1 to 6, characterized in that the operational situation "controlled braking" of the vehicle is recognizable in that the vehicle retardation is smaller than a preferably settably predetermined threshold value $z_{min}$.

8. Process according to one of Claims 1 to 7, characterized in that the operational situation "controlled braking" of the vehicle is recognized in that the brake pressure which the driver feeds into the braking system (10) by actuation of the braking device (16) is smaller than a preferably settably predetermined threshold value $p_{min}$.

9. Process according to one of Claims 1 to 8, characterized in that for the coefficient of friction/slip interrelationship which is determined with reference to slip and retardation as well as possibly acceleration measurements and which is applicable to the respective vehicle wheel, by interpolation or matching of an approximation relation which can be evaluated by means of an electronic control unit (50) to characteristic base points of the stored $\mu_B/\lambda_B$ value pairs which is obtained by the measurement and stored, an algorithm is obtained which can be utilized for a continuous processing of measured $\lambda_B$ data in units of the coefficient of friction utilized.

10. Process according to Claim 9, characterized in that the determination of the currently utilized coefficient of friction $\mu_B$ takes place by evaluation of a relation of the form

$$\mu_B = C_1 \left(1 - e^{-C_2 \lambda_B}\right) - C_3 \lambda_B$$

in which $C_1$, $C_2$ and $C_3$ designate constants which are obtained by matching the relation to measured $\lambda_B$ and $\mu_B$ values and are stored as parameters of the relation used for the continuous evaluation and continuously updated.

11. Slip control system for carrying out the process according to one of Claims 1 to 10, on a road vehicle which is equipped both with an antilock system (20) which permits an individual brake pressure control on the individual vehicle wheels and a device for an electronically controlled distribution of the brake forces exertable via the front wheel brakes (11, 12) and via the rear wheel brakes (13, 14), having a braking device comprising a tandem master cylinder (16') and having a control pressure source (40) with an electrically controllable output pressure which can be coupled into a control pressure space (96) of the braking device and thereby is additively superposed upon the brake pressure which can be generated just by pedal actuation of the braking device and which can be coupled into the rear wheel brakes (13, 14), in which the control pressure source comprises an electronic control unit (50) which generates, from a processing at least of wheel speed-of-rotation sensor output signals which are individually allocated to the vehicle wheels as well as of pressure sensor output signals by means of which electrical signals which are characteristic of the generatable brake pressures can be obtained, the control signals which are required for the control of the brake force distribution, characterized in that the front wheel brakes (11, 12) are connected to the primary output pressure space (56) and the rear wheel brakes (13, 14) are connected to the secondary output pressure space (57) of the tandem master

20

cylinder (16'), in that the bore stage (63), forming the housing-fast limit of the secondary output pressure space (57), of the housing (64), within which bore stage the secondary output pressure space (57) is delimited by an outer piston flange (74) of the secondary piston (59) in relation to a downstream chamber (82) - kept pressureless - and the latter is sealed off by an inner piston flange (73) in relation to an inner portion of this bore stage (63) in movable fashion, is delimited by an intermediate wall (68) of the housing (64) in relation to a central bore stage (66), which proceeds from the bore stage (61) receiving the primary piston (58), the cross-sectional area $A_1$ of which bore stage is somewhat greater than the cross-sectional area $A_3$ of the central bore stage (66), in that in the central bore stage (66) there is guided displaceably in pressure tight fashion an actuating piston (69), which forms the axially movable - inner - limit of the primary output pressure space (56) and delimits the latter in relation to a pressureless downstream chamber (86), which is limited axially in housing-fast fashion by the intermediate wall (68), in that this actuating piston (69) is provided with a thrust rod (71) which axially penetrates the central downstream chamber (86) and which passes displaceably in pressure tight fashion through a central bore (72) of the intermediate wall (68) and can be axially supported on the inner piston flange (73) of the secondary piston (59), and in that the annular space (96) which is limited in axially movable fashion by the inner piston flange (73) of the secondary piston (59) and in axially housing-fast fashion by the intermediate wall (68), and which is likewise centrally penetrated by the thrust rod (71), is connected to the pressure output (42) of the controllable pressure source (40).

12. Slip control system according to Claim 11, characterized in that the end portion (71'), engaging at the secondary piston (59), of the thrust rod (71) of the actuating piston (69) is disposed in a blind bore (88) of the secondary piston (59) displaceably in pressure tight fashion relative to the latter and can be supported on the base (91) of this blind bore (88).

13. Slip control system according to Claim 12, characterized in that the inner piston flange (73) of the secondary piston (59) is provided with a compensating bore (92) which opens centrally at the base (91) of the blind bore (88) into the latter and connects the latter to the downstream chamber (82).

14. Slip control system according to one of Claims 11 to 13, characterized in that between that output pressure space (56) of the tandem master cylinder (16') which is allocated to the front axle braking circuit (I) of the braking system (10) of the vehicle and the main brake line (22), leading onto the front wheel brakes (11, 12), of the front axle braking circuit (I) there is provided a secondary cylinder (16''), which acts as pressure converter and which for its part has a control pressure space (196), into which a controllable output pressure of the control pressure source (40) can be coupled, which output pressure can be additively superposed upon the output pressure which can be generated in the output pressure space (157) of this secondary cylinder (16'') just by actuation of the master cylinder (16').

15. Slip control system according to Claim 14, characterized in that to the secondary cylinder (16'') there is allocated a specifically associated control pressure output (41) of the control pressure source (40).

16. Slip control system according to one of Claims 11 to 15, characterized in that to at least one of the pressure outputs (19', 21'), preferably the pressure output (19') of the primary output pressure space (26) of the tandem master cylinder (16'), there is connected a pressure sensor (107), which generates an electrical output signal which is characteristic of the pressure in the tandem master cylinder (16') and which is fed as information input to the electronic control unit (50).

17. Slip control system according to one of Claims 11 to 16, characterized in that to the control pressure outputs (41, 42) of the control pressure source (40) there is allocated a respective pressure sensor (54, 55), which generates an electrical output signal which is characteristic of the control pressure made available at the respective pressure output (41 and 42 respectively) and which is fed to the electronic control unit (50).

18. Slip control system according to one of Claims 11 to 17, characterized in that pressure sensors (60) respectively individually allocated to the front wheel brakes (11, 12) and to the rear wheel brakes (13, 14) are provided, which sensors generate electrical output signals which are characteristic of the brake pressures prevailing in the individual wheel brakes and which are fed as further information inputs to the electronic control unit.

21

**19.** Slip control system according to one of Claims 11 to 18, characterized in that a transverse acceleration sensor (112) and/or a yaw angle sensor is/are provided, which generate electrical output signals which can be evaluated by the electronic control unit (50) in units of transverse forces acting on the vehicle.

**20.** Slip control system according to one of Claims 11 to 19, characterized in that a force sensor is provided, which generates an electrical output signal which is characteristic of the force with which the driver actuates the brake pedal (70) of the braking system (10) and which is fed to the electronic control unit (50).

**Revendications**

**1.** Procédé de détermination de la caractéristique adhérence mécanique/patinage des pneus d'un véhicule routier, équipé d'un système anti-blocage conçu pour effectuer une régulation sur une roue unique, à la suite duquel, en fonctionnement de roulage du véhicule, à partir de couples de valeurs de patinage $\lambda$ mesurés et du coefficient d'adhérence $\mu$ utilisé pour un patinage donné, on déduit l'allure de la caractéristique de pneus spécifique pour l'ensemble du champ $\mu/\lambda$, où pendant cette phase de test initiale du freinage, on détermine de façon continue le dérapage de freinage $\lambda_B$ absolu d'après la relation :

$$\lambda_B = \frac{v_F - v_R}{v_F}$$

ainsi que l'on détermine l'utilisation d'adhérence $\mu_B$ combinée à la valeur spécifique du dérapage au freinage $\lambda_B$, donnée dans le cas du freinage d'une roue arrière par la relation

$$\mu_{BH} = \frac{2z}{\varphi - z \cdot \chi}$$

et dans le cas du freinage d'une roue avant par la relation

$$\mu_{BV} = \frac{2z}{1 - \varphi + z \cdot \chi}'$$

en désignant dans ces relations par $v_F$ la vitesse du véhicule, par $v_R$ la vitesse de la roue freinée du véhicule, par $\phi$ la contribution de l'essieu arrière, par $\chi$ la hauteur du centre de gravité, liée à l'empattement, du véhicule et par $z$ le ralentissement au freinage mesuré du véhicule, et où l'on utilise, à titre de vitesse de véhicule $v_F$, une valeur obtenue à partir des vitesses périphériques de roues des roues de véhicules non-freinées, caractérisé par les propriétés ci-après :

a) lors d'une phase initiale, d'un freinage théorique combiné avec un ralentissement modéré du véhicule, on ne sollicite que le frein de roue d'une seule roue du véhicule par une pression de freinage et celle-ci, lors de la phase d'augmentation initiale de la pression de freinage, est établie à une valeur faisant qu'en résulte au moins à peu près le ralentissement initial - allant en augmentant - correspondant au souhait du conducteur;

b) dès que, au moyen du freinage seul de la roue de test, le ralentissement du véhicule $z$ n'a pas manifesté d'augmentation supplémentaire et/ou que la roue de véhicule freinée est ralentie plus fortement que ce qui correspond à une valeur de seuil prédéterminée, le freinage de test est interrompu et le freinage est continué par une alimentation en pression sur les autres roues du véhicule;

c) les phases de freinage test correspondant aux propriétés a) et b) sont conduites en succession cyclique, pour l'ensemble des roues du véhicule.

EP 0 618 868 B1

**2.** Procédé selon la revendication 1, caractérisé en ce que le freinage test est conduit sur une roue arrière lorsque le souhait du conducteur correspond à un freinage avec un ralentissement modéré du véhicule, compris entre 0,1 g et 0,2 g, et est conduit sur une roue avant lorsque le souhait du conducteur correspond à un ralentissement quelque peu plus élevé du véhicule, compris entre 0,2 g et 0,4 g.

**3.** Procédé selon la revendication 1 ou la revendication 2, caractérisé en ce que, dans un cycle de test, sont freinées deux roues du véhicule disposées à l'opposé en diagonale, lorsque le souhait du conducteur correspond à un ralentissement de freinage supérieur à 0,4 g.

**4.** Procédé selon la revendication 3, caractérisé en ce que la phase de test est d'abord conduite sur la roue arrière puis sur la roue avant.

**5.** Procédé selon l'une des revendications 1 à 4, caractérisé en ce que, dans le cas d'une conduite de la phase de freinage de test sur une roue de véhicule entraînée, celle-ci est découplée du train de transmission du véhicule.

**6.** Procédé selon l'une des revendications 1 à 5, caractérisé en ce que la situation en fonctionnement qu'est le "freinage théorique" du véhicule est identifiée de manière que le conducteur actionne la pédale de freinage (17) de l'installation de freinage (10) avec une force $K_p$ inférieure à une valeur de seuil prédéterminée, de préférence réglable.

**7.** Procédé selon l'une des revendications 1 à 6, caractérisé en ce que la situation en fonctionnement qu'est le "freinage théorique" du véhicule est identifiable au fait que le ralentissement du véhicule est inférieur à une valeur de seuil $z_{min}$ prédéterminée, de préférence réglable.

**8.** Procédé selon l'une des revendications 1 à 7, caractérisé en ce que la situation en fonctionnement qu'est le "freinage théorique" du véhicule est identifiée au fait que la pression de freinage que commande le conducteur par actionnement de l'appareil de freinage (16) dans l'installation de freinage (10) est inférieure à une valeur de seuil $p_{min}$ prédéterminée, de préférence réglable.

**9.** Procédé selon l'une des revendications 1 à 8, caractérisé en ce que, pour ce qui concerne la liaison coefficient d'adhérence/patinage déterminée à l'aide de mesures de patinage-dérapage et de ralentissement, ainsi que, le cas échéant, d'accélération, cette liaison valant pour la roue de véhicule spécifique, en opérant par interpolation ou adaptation d'une relation d'approximation, exploitable au moyen d'une unité de commande (50) électronique, ceci en des points d'assistance caractéristiques du stock de couples de valeurs $\mu_B/\lambda_B$ obtenues par la mesure et stockées en mémoire, est obtenu un algorithme qui est exploitable pour effectuer un traitement en continu de données $\lambda_B$ mesurées, en unités du coefficient d'adhérence exploité.

**10.** Procédé selon la revendication 9, caractérisé en ce que la détermination du coefficient d'adhérence $\mu_B$ utilisé actuel est obtenue par évaluation d'une relation de la forme

$$\mu_B = c_1(1 - \ell^{-c_2\lambda_B}) - c_3\lambda_B$$

dans laquelle on désigne par $c_1$, $c_2$ et $c_3$ des constantes qui ont été obtenues par adaptation de la relation à des valeurs de $\lambda_B$ et $\mu_B$ mesurées et qui ont été stockées comme paramètres de la relation utilisée pour l'évaluation en continu et qui sont actualisées de façon continue.

**11.** Système de régulation du patinage pour mettre en oeuvre le procédé selon l'une des revendications 1 à 10, sur un véhicule routier, équipé tant d'un système anti-blocage (20), qui permet d'effectuer une régulation individuelle de la pression de freinage sur les différentes roues du véhicule; qu'également d'un dispositif destiné à établir une répartition, commandée de façon électronique, des efforts de freinage pouvant être exercés sur les freins de roues avant (11, 12) et sur les freins de roues arrière (13, 14) avec un appareil de freinage comprenant un cylindre principal (16') tandem et avec une source de pression de commande (40) avec une pression de sortie pouvant être commandée de façon électrique, qui peut être couplée dans une enceinte de pression de commande (96) de l'appareil de

23

freinage et peut être de ce fait couplée à la pression de freinage, pouvant être produite par le seul actionnement de la pédale de l'appareil de freinage, des freins de roues arrière (13, 14), avec une superposition de nature additive, la source de pression de commande comprenant une unité de commande (50) électronique qui produit les signaux de commande nécessaires à la commande de la répartition de la force de freinage, à partir d'un traitement au moins des signaux de sortie de capteurs de vitesse de rotation de roues, signaux associés individuellement aux roues du véhicule, ainsi qu'à partir de signaux de sortie de capteur de pression, au moyen desquels des signaux électriques caractéristiques des pressions de freinage peuvent être produites, caractérisé en ce que les freins de roues avant (11, 12) sont raccordés à l'enceinte de pression de sortie primaire (56) et les freins de roues arrière (13, 14) sont raccordés à l'enceinte de pression de sortie secondaire (57) du cylindre principal tandem (16'), en ce que l'étage de perçage (63), constituant la limitation fixe par rapport au carter de l'enceinte de pression de sortie secondaire (57), du carter (64) est délimité à l'intérieur de ceui-ci par une bride de piston (74) extérieure du piston secondaire (59) de l'enceinte de pression de sortie secondaire (57), vis-à-vis d'une enceinte de poursuite (82) - maintenue sans pression - et celle-ci est isolée de façon étanche, de façon mobile, au moyen d'une bride de piston intérieure (73) vis-à-vis d'un tronçon intérieur de cet étagement de perçage (63), en étant délimitée, par une paroi intermédiaire (68) du carter (64), par rapport à un étagement de perçage central (66), qui part de l'étage de perçage (61) recevant le piston primaire (58) et dont l'aire de section transversale $A_1$ est quelque peu supérieure à l'aire de section transversale $A_3$ de l'étage de perçage central (66), en ce que, dans l'étage de perçage central (66) est guidé déplaçable, de façon étanche à la pression, un piston d'actionnement (69) qui constitue la limitation mobile axialement - intérieure - de l'enceinte de pression de sortie primaire (56) et délimite celle-ci vis-à-vis d'une enceinte de poursuite (86) sans pression, délimitée axialement de façon fixe par rapport au carter par la paroi intermédiaire (68), en ce que ce piston d' actionnement (69) est pourvu d'un poussoir (71), traversant axialement l'enceinte de poursuite centrale (86) et passant, de façon déplaçable et de façon étanche à la pression, à travers un perçage central (72) de la paroi intermédiaire (68) et pouvant prendre appui axialement sur la bride de piston intérieure (73) du piston secondaire (59), et en ce que l'enceinte annulaire (96), traversée également centralement par le poussoir (71), délimitée par la bride de piston intérieure (73) du piston secondaire (59), d'une façon mobile axialement et par la paroi intermédiaire (68) d'une façon fixe axialement par rapport au carter, est raccordée à la sortie de pression (42) de la source de pression (40) pouvant être commandée.

**12.** Système de réglage anti-patinage selon la revendication 11, caractérisé en ce que la section d'extrémité (71'), agissant sur le piston secondaire (59) du poussoir (71) du piston d'actionnement (69) est disposée, déplaçable de façon étanche à la pression, dans un trou borgne (88) du piston secondaire (59) par rapport à celui-ci, et peut prendre appui sur le fond (91) de ce trou borgne (88).

**13.** Système de régulation anti-patinage selon la revendication 12, caractérisé en ce que la bride de piston intérieure (73) du piston secondaire (59) est pourvue d'un perçage de compensation (92) débouchant centralement au fond (91) du trou borgne (88), dans celui-ci et relient celui-ci à l'enceinte de poursuite (82).

**14.** Système de réglage anti-patinage selon l'une des revendications 1 à 13, caractérisé en ce qu'entre l'enceinte de pression de sortie (56) associée au circuit de freinage d'essieu avant (I) de l'installation de freinage (10) du véhicule, du cylindre principal tandem (16') et la conduite de freinage principale (22), continuant jusqu'aux freins de roues avant (11, 12), du circuit de freinage d'essieu avant (I) est prévu un cylindre secondaire (16''), agissant comme convertisseur de pression et ayant de son côté une enceinte de pression de commande (196), dans laquelle peut être couplée une pression de sortie, pouvant être commandée, de la source de pression de commande (40), qui peut être superposée de façon additive à la pression de sortie pouvant être produite dans l'enceinte de pression de sortie (157) de ce cylindre secondaire (16''), rien que par l'actionnement du cylindre principal (16').

**15.** Système de régulation anti-patinage selon la revendication 14, caractérisé en ce qu'une sortie de pression de commande (41) propre de la source de pression de commande (40) est associée au cylindre secondaire (16'').

**16.** Système de régulation anti-patinage selon l'une des revendications 1 à 15, caractérisé en ce que, sur au moins l'une des sorties de pression (19', 21'), de préférence la sortie de pression (19'), de l'enceinte de pression de sortie primaire (26) du cylindre principal tandem (16'), est raccordé un capteur de pression (107), qui produit un signal de sortie électrique caractéristique de la pression régnant dans le cylindre principal tandem (16') et qui est amené à l'unité de commande électronique (50) à titre d'entrée d'informations.

17. Système de régulation anti-patinage selon l'une des revendications 11 à 16, caractérisé en ce qu'est associé à chacune des sorties de pression de commande (41, 42) de la source de pression de commande (40) un capteur de pression (54, 55), qui produit un signal de sortie électrique caractéristique de la pression de commande fournie à la sortie de pression (41, respectivement 42) spécifique et qui est amené à l'unité de commande électronique (50).

18. Système de régulation anti'patinage selon l'une des revendications 11 à 17, caractérisé en ce que des capteurs de pression (60), chacun associé individuellement aux freins de roues avant (11, 12) et aux freins de roues arrière (13, 14) sont prévus, qui produisent des signaux de sortie électriques caractéristiques des pressions de freinage régnant dans les différents freins de roues, signaux qui sont amenés à l'unité de commande électronique à titre de données de d'informations supplémentaires.

19. Système de régulation anti-patinage selon l'une des revendications 11 à 18, caractérisé en ce qu'un capteur d'accélération transversale (112) et/ou un capteur de lacetembardée est/sont prévus, produisant des signaux de sortie êlectriques pouvant être exploités par l'unité de commande électronique (50), en termes d'unités d'efforts transversaux agissant sur le véhicule.

20. Système de régulation anti-patinage selon l'une des revendications 11 à 17, caractérisé en ce qu'est prévu un capteur dynamométrique, produisant un signal de sortie électrique, caractéristique de la force avec laquelle le conducteur actionne la pédale de frein (70) de l'installation de freinage (10) et amené à l'unité de commande électronique (50).

EP 0 618 868 B1

Fig. 1

26

Fig.2

EP 0 618 868 B1

Fig. 3

Fig. 4